(19) Europäisches Patentamt
European Patent Office
Office européen des brevets

(11) EP 4 292 827 A1

# (12) EUROPEAN PATENT APPLICATION
published in accordance with Art. 153(4) EPC

(43) Date of publication:
**20.12.2023 Bulletin 2023/51**

(21) Application number: **22752856.9**

(22) Date of filing: **14.02.2022**

(51) International Patent Classification (IPC):
***B41M 1/30*** *(2006.01)* ***C09D 11/037*** *(2014.01)*
***B32B 7/12*** *(2006.01)* ***G02B 5/30*** *(2006.01)*

(52) Cooperative Patent Classification (CPC):
**B32B 7/12; B41M 1/30; C09D 11/037; G02B 5/30**

(86) International application number:
**PCT/JP2022/005587**

(87) International publication number:
**WO 2022/173034 (18.08.2022 Gazette 2022/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.02.2021 JP 2021021699**

(71) Applicant: **Zeon Corporation**
**Tokyo 100-8246 (JP)**

(72) Inventors:
- **HARAI, Kenichi**
  **Tokyo 100-8246 (JP)**
- **IKEDA, Akira**
  **Tokyo 100-8246 (JP)**

(74) Representative: **Maiwald GmbH**
**Elisenhof**
**Elisenstraße 3**
**80335 München (DE)**

## (54) INK COMPOSITION, ARTICLE, AND PRODUCTION METHOD THEREFOR

(57) An ink composition comprising: a cholesteric pigment that includes a cured product of a liquid crystal composition including a polymerizable compound; and a non-volatile organic compound, wherein an absolute value $|\Delta HSP_1|$ of a difference between a weighted average of HSP of the polymerizable compound and HSP of the organic compound is 3.0 or less; or an absolute value $|\Delta logP_1|$ of a difference between a weighted average of logP of the polymerizable compound and logP of the organic compound is 1.0 or less.

EP 4 292 827 A1

## Description

Technical Field

The present invention relates to an ink composition, as well as an article and a method for producing the same.

Background Art

An ink composition including a cholesteric pigment is one of painting materials which include pigments including cured products of liquid crystal compositions (Patent Literatures 1 to 4).

Citation List

Patent Literature

Patent Literature 1: Japanese Patent Application Laid-Open No. 2002-114935 A
Patent Literature 2: Japanese Patent Application Laid-Open No. 2002-121408 A
Patent Literature 3: Japanese Patent Application Laid-Open No. 2003-253187 A
Patent Literature 4: Japanese Patent Application Laid-Open No. 2004-358869 A

Summary of The Invention

Technical Problem

A cholesteric pigment is generally formed of a cured product of a liquid crystal composition exhibiting a cholesteric liquid crystal phase, and molecules in the pigment have cholesteric regularity. Thus, the cholesteric pigment is generally capable of reflecting circularly polarized light having one of clockwise rotation direction and counterclockwise rotation direction while transmitting circularly polarized light having a rotation direction opposite to the one rotation direction at a wavelength corresponding to the cholesteric regularity. Therefore, when an ink composition including the cholesteric pigment is applied to form a display layer, the resulting display layer is capable of selectively reflecting the circularly polarized light having one rotation direction.

However, when a display layer formed from a conventional ink composition is placed in a high-temperature and high-humidity environment, the wavelength at which the cholesteric pigment can selectively reflect the circularly polarized light may be shifted. This shift usually causes a change in the wavelength of the circularly polarized light that can be reflected by the display layer and may cause an unintended change in a color of the display layer. Thus, it is desirable to suppress the change in the wavelength, at which the cholesteric pigment included in the display layer can selectively reflect the circularly polarized light, in a high-temperature and high-humidity environment to improve durability in the high-temperature and high-humidity environment.

The present invention has been created in view of the above-mentioned problem. An object of the present invention is to provide: an ink composition capable of suppressing a change in a wavelength of circularly polarized light, which a cholesteric pigment can reflect, in a high-temperature and high-humidity environment; and an article comprising a display layer obtained by applying the ink composition and a method for producing the same.

Solution to Problem

The present inventor has intensively studied to solve the above-mentioned problem. As a result, the present inventor has found that the above-mentioned problem can be solved by combining an organic compound having HSP or logP within a particular range with a cholesteric pigment, thereby completing the present invention.

That is, the present invention includes the following.

<1> An ink composition comprising: a cholesteric pigment that includes a cured product of a liquid crystal composition including a polymerizable compound; and a non-volatile organic compound, wherein

an absolute value $|\Delta HSP_1|$ of a difference between a weighted average of HSP of the polymerizable compound and HSP of the organic compound is 3.0 or less; or
an absolute value $|\Delta logP_1|$ of a difference between a weighted average of logP of the polymerizable compound

and logP of the organic compound is 1.0 or less.

<2> The ink composition according to <1>, wherein the liquid crystal composition includes the same compound as the organic compound.
<3> The ink composition according to <1> or <2>, wherein the organic compound is a liquid crystal compound.
<4> The ink composition according to any one of <1> to <3>, wherein a square root of a sum of squares $\{|\Delta HSP_1|^2 + |\Delta logP_1|^2\}^{1/2}$ of the absolute value $|\Delta HSP_1|$ and the absolute value $|\Delta logP_1|$ is 5.0 or less.
<5> The ink composition according to any one of <1> to <4>, wherein a square root of a sum of squares $\{|\Delta HSP_1|^2 + |\Delta logP_1|^2\}^{1/2}$ of the absolute value $|\Delta HSP_1|$ and the absolute value $|\Delta logP_1|$ is 1.5 or less.
<6> The ink composition according to any one of <1> to <5>, wherein:

the polymerizable compound includes a main component monomer;
an amount of the main component monomer included in the liquid crystal composition is 50% by weight or more relative to 100% by weight of a non-volatile component in the liquid crystal composition; and
the main component monomer and the organic compound are the same as each other.

<7> The ink composition according to any one of <1> to <6>, including an organic solvent containing a diluent, wherein an absolute value $|\Delta HSP_2|$ of a difference between a weighted average of HSP of the polymerizable compound and HSP of the diluent is greater than 2.
<8> The ink composition according to <7>, wherein the diluent has HSP of 26 or more.
<9> The ink composition according to <7>, wherein the diluent has HSP of 18 or less.
<10> The ink composition according to any one of <1> to <9>, wherein the polymerizable compound includes a compound represented by the following formula (X1):

<Chemical formula 1>

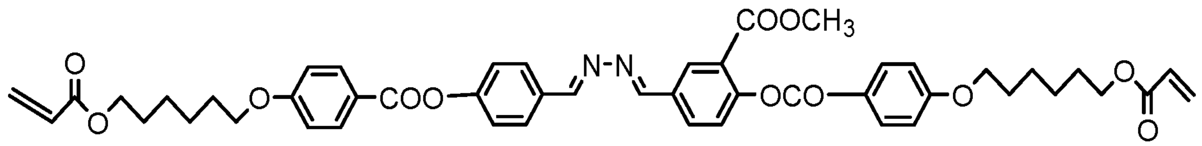

(X1)

.

<11> The ink composition according to any one of <1> to <10>, wherein:

the cholesteric pigment has a selective reflection wavelength range in which the cholesteric pigment can reflect circularly polarized light having one rotation direction, and can transmit circularly polarized light having a rotation direction opposite to the one rotation direction; and
a wavelength width of the selective reflection wavelength range is 50 nm or more.

<12> The ink composition according to <11>, wherein the selective reflection wavelength range includes an entire visible wavelength range.
<13> The ink composition according to any one of <1> to <12>, wherein the cholesteric pigment has a flake-shape.
<14> The ink composition according to <13>, wherein a thickness of the cholesteric pigment is 20 $\mu$m or less.
<15> The ink composition according to any one of <1> to <14>, wherein an amount of the organic compound is 0.5 part by weight or more and 10 parts by weight or less relative to 100 parts by weight of the cholesteric pigment.
<16> The ink composition according to any one of <1> to <15>, wherein when a display layer formed by applying the ink composition is subjected to a durability test in which the display layer is stored for 14 days in an environment with a temperature of 90°C and a humidity of 80% RH, an amount of change of a central wavelength of a selective reflection wavelength range of the cholesteric pigment is 15 nm or less.
<17> An article comprising a display layer obtained by applying the ink composition according to any one of <1> to <16>.
<18> A method for producing an article comprising applying the ink composition according to any one of <1> to <16> to form a display layer.

Advantageous Effects of Invention

According to the present invention, it is possible to provide an ink composition capable of suppressing a change in a wavelength of circularly polarized light, which a cholesteric pigment can reflect, in a high-temperature and high-humidity environment; and an article comprising a display layer obtained by applying the ink composition and a method for producing the same.

Brief Description of Drawings

FIG. 1 is a graph showing a calibration curve used for measuring logP in Examples of the present invention and Comparative Examples.

Description of Embodiments

Hereinafter, the present invention will be described in detail with reference to embodiments and examples. However, the present invention is not limited to embodiments and examples described below, and may be freely modified for implementation without departing from the scope of claims of the present invention and the scope of their equivalents.

In the following description, the term "(meth)acryloyl group" includes an acryloyl group, a methacryloyl group, and combinations thereof, unless otherwise specified.

In the following description, a direction of an element being "parallel" may allow an error within the range of not impairing the advantageous effects of the present invention, for example, within a range of ±5°, preferably ±3°, or more preferably ±1°, unless otherwise specified.

[1. Summary of ink composition]

An ink composition according to an embodiment of the present invention includes a cholesteric pigment that comprises a cured product of a liquid crystal composition including a polymerizable compound, and a non-volatile organic compound. In the following description, the cured product of the liquid crystal composition may be referred to as a "liquid crystal cured product". The above-mentioned organic compound satisfies at least one of the following requirements (i) and (ii) and preferably satisfies both requirements.

Requirement (i): an absolute value $|\Delta HSP_1|$ of the difference between the weighted average of HSP of the polymerizable compound and HSP of the organic compound is 3.0 or less.

Requirement (ii): an absolute value $|\Delta logP_1|$ of the difference between the weighted average of logP of the polymerizable compound and logP of the organic compound is 1.0 or less.

The term "HSP" means the Hildebrand solubility parameter. HSP can be calculated by the Y-MB method.

The term "logP" represents 1-octanol/water partition coefficient. The logP of a sample compound may be measured by the following measurement method. A sample solution containing 1% by weight of the sample compound is prepared and subjected to an HPLC/ELSD analysis (high liquid chromatography/evaporative light scattering detection analysis) using a method generally conforming with JIS 7260-117:2006 {measurement of partition coefficient (1-octanol/water)-high performance liquid chromatography} to measure elution time (r.t.). On the other hand, standard compounds with a known logP value described in JIS 7260-117: 2006 are subjected to the HPLC/ELSD analysis in the same manner as the above-mentioned sample compound to measure elution time (r.t.). On the basis of the measurement result of the standard compounds, a calibration curve showing a relation between the elution time and logP is created. Then, the elution time measured for the sample compound is applied to the above-mentioned calibration curve to obtain logP of the sample compound.

In the following description, the above-mentioned non-volatile organic compound that satisfies at least one of the requirement (i) and the requirement (ii) may be referred to as a "stabilizer". Furthermore, the weighted average of HSP of the polymerizable compound included in the liquid crystal composition may be referred to as "weighted average HSP". The weighted average of logP of the polymerizable compound included in the liquid crystal composition may be referred to as "weighted average logP". The above-mentioned weighted average represents the weighted average based on the weight.

When the above-mentioned ink composition is applied to form a display layer, the ink composition can exhibit an effect of suppressing a change in a wavelength of circularly polarized light, which can be reflected by a cholesteric pigment included in the display layer, in a high-temperature and high-humidity environment.

[2. Cholesteric pigment]

The cholesteric pigment includes a cured product (i.e., a liquid crystal cured product) of a liquid crystal composition including a polymerizable compound. The liquid crystal composition includes one or more polymerizable compounds having polymerizability, and may further include a non-polymerizable compound having no polymerizability, as necessary.

The liquid crystal cured product as a cured product of the liquid crystal composition may be obtained by causing a curing reaction such as polymerization and crosslinking of the polymerizable compound to cure the liquid crystal composition. Therefore, the liquid crystal cured product may include a polymer obtained by polymerizing the polymerizable compound. A part of the polymerizable compound may remain without polymerization, and therefore, the polymerizable compound unreacted may be contained in the liquid crystal cured product. Furthermore, the above-mentioned polymerizable compound and polymer thereof may be crosslinked. In general, a cholesteric pigment includes a layer formed of the above-mentioned liquid crystal cured product.

The liquid crystal cured product contained in the cholesteric pigment includes molecules having cholesteric regularity. In general, a part or all of the molecules of the polymerizable compound and the polymer thereof contained in the liquid crystal cured product have cholesteric regularity in the liquid crystal cured product.

The cholesteric regularity is a structure in which the angle of molecular axes in stacking planes are shifted (twisted) as the planes are observed sequentially passing through the stacked planes, such that molecular axes in a certain first plane are oriented in a certain direction, molecular axes in a subsequent plane stacking on the first plane are oriented in a direction shifted by a small angle with respected to that of the first plane, and molecular axes in still another plane are oriented in a direction of a further shifted angle. That is, when molecules inside a layer have cholesteric regularity, molecular axes of the molecules on a first plane inside the layer are aligned along a constant direction. On the subsequent second plane stacking on the first plane inside the layer, a direction of molecular axes is shifted by a slight angle from the direction of the molecular axes on the first plane. On the subsequent third plane further stacking on the second plane, a direction of molecular axes is further shifted by an angle from the direction of the molecular axes on the second plane. In this manner, on the planes disposed in a stacking manner, the angles of the molecular axes on these planes are sequentially shifted (twisted). The structure in which the directions of the molecular axes are twisted in this manner is usually a helical structure and is an optically chiral structure.

As described above, the liquid crystal cured product containing molecules having cholesteric regularity can generally exhibit the circularly polarized light separation function. The "circularly polarized light separation function" means a function of reflecting circularly polarized light having one of a clockwise rotation direction and a counterclockwise rotation direction and transmitting circularly polarized light having a rotation direction opposite to the one rotation direction. Therefore, the cholesteric pigment including the liquid crystal cured product can reflect circularly polarized light having one rotation direction, and can transmit circularly polarized light having a rotation direction opposite to the one rotation direction, within a wavelength range in which the cholesteric pigment can exhibit the circularly polarized light separation function. In the above-mentioned reflection, the circularly polarized light is reflected while maintaining its chirality. In the following description, the wavelength range in which the cholesteric pigment can exhibit the circularly polarized light separation function as described above may be referred to as a "selective reflection wavelength range" as appropriate. The reflectance of the cholesteric pigments with respect to unpolarized light in the selective reflection wavelength range is usually 35% to 50%, and preferably 40% to 50%. Since the liquid crystal cured product can exhibit the circularly polarized light separation function, the cholesteric pigment including the liquid crystal cured product can function as a pigment.

From the viewpoint of easily obtaining a liquid crystal cured product containing molecules having cholesteric regularity, the liquid crystal composition is preferably a cholesteric liquid crystal composition. The cholesteric liquid crystal composition refers to a liquid crystal composition capable of exhibiting a liquid crystal phase (cholesteric liquid crystal phase) in which, when a liquid crystal compound contained in the liquid crystal composition is oriented, the liquid crystal compound has cholesteric regularity. A material referred to herein as a "liquid crystal composition" includes not only a mixture of two or more substances, but also a material composed of a single substance, for convenience.

The liquid crystal composition includes a liquid crystal compound. The liquid crystal composition may further includes optional components such as an orientation aid, a chiral agent, a surfactant, and a polymerization initiator, as necessary. A part or all of the liquid crystal compound and the optional component may be a polymerizable compound having polymerizability.

(Liquid crystal compound)

The liquid crystal compound included in the liquid crystal composition is preferably a cholesteric liquid crystal compound. The cholesteric liquid crystal compound represents a compound capable of exhibiting cholesteric liquid crystallizability. By using a liquid crystal composition including a cholesteric liquid crystal compound and curing the liquid crystal composition in a state in which a cholesteric liquid crystal phase is exhibited, a liquid crystal cured product containing molecules having cholesteric regularity can be smoothly obtained.

The liquid crystal compound preferably has polymerizability, and therefore is preferably a polymerizable compound.

The liquid crystal compound having polymerizability usually has a reactive group. Examples of suitable reactive groups may include a (meth)acryloyl group, an epoxy group, a thioepoxy group, an oxetane groups, a thietanyl group, an aziridinyl group, a pyrrole group, a fumarate group, a cinnamoyl group, an isocyanate group, an isothiocyanate group, an amino group, a hydroxyl group, a carboxyl group, an alkoxysilyl group, an oxazoline group, a mercapto group, a vinyl group, and an allyl group. The number of reactive groups included in one molecule of the liquid crystal compound may be one, and is preferably two or more from the viewpoint of obtaining a cholesteric pigment excellent in durability. When a liquid crystal compound has a plurality of reactive groups within one molecule, the reactive groups may be the same as, or different from, one another.

Examples of the preferable liquid crystal compounds having polymerizability may include a rod-shaped liquid crystal compound having two or more reactive groups within one molecule. Specific examples of the rod-shaped liquid crystal compound may include a compound represented by the formula (1).

$$R^3\text{-}C^3\text{-}D^3\text{-}C^5\text{-}M\text{-}C^6\text{-}D^4\text{-}C^4\text{-}R^4 \qquad \text{Formula (1)}$$

In the formula (1), $R^3$ and $R^4$ each independently represent a reactive group. $R^3$ and $R^4$ are preferably one selected from the group consisting of the aforementioned exemplified reactive groups.

In the formula (1), $D^3$ and $D^4$ each independently represent a group selected from the group consisting of a single bond, a linear or branched alkyl group having 1 to 20 carbon atoms, and a linear or branched alkylene oxide group having 1 to 20 carbon atoms.

In the formula (1), $C^3$ to $C^6$ each independently represent a group selected from the group consisting of a single bond, -O-, -S-, -S-S-, -CO-, -CS-, -OCO-, $-CH_2-$, - $OCH_2-$, -CH=N-N=CH-, -NHCO-, -O-(C=O)-O-, $-CH_2-(C=O)-O-$, and $-CH_2O-(C=O)-$.

In the formula (1), M represents a mesogen group. Preferable examples of the mesogen groups may include a group obtained by bonding same or different two to four skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and alkenylcyclohexylbenzonitriles, which may or may not have a substituent, via a bonding group such as -O-, -S-, -S-S-, - CO-, -CS-, -OCO-, $-CH_2-$, $-OCH_2-$, -CH=N-N=CH-, -NHCO-, -O-(C=O)-O-, $-CH_2-(C=O)-O-$, and $-CH_2O-(C=O)-$.

Examples of the substituents which the mesogen group M may have may include a halogen atom, an alkyl group having 1 to 10 carbon atoms optionally having a substituent, a cyano group, a nitro group, $-O-R^5$, $-O-C(=O)-R^5$, $-C(=O)-O-R^5$, $-O-C(=O)-O-R^5$, $-NR^5-C(=O)-R^5$, $-C(=O)-NR^5R^7$, and $-O-C(=O)-NR^5R^7$. Herein, $R^5$ and $R^7$ represent a hydrogen atom or an alkyl group having 1 to 10 carbon atoms. When $R^5$ and $R^7$ are an alkyl group, the alkyl group may have -O-, -S-, -O-C(=O)-,-C(=O)-O-, -O-C(=O)-O-, $-NR^6-C(=O)-$, $-C(=O)-NR^6-$, $-NR^6-$, or -C(=O)- inserted therein (except a case where two or more -O- or -S- groups are adjacently inserted). Herein, $R^6$ represents a hydrogen atom or an alkyl group having 1 to 6 carbon atoms.

Examples of the substituent in the above-mentioned "alkyl group having 1 to 10 carbon atoms optionally having a substituent" may include a halogen atom, a hydroxyl group, a carboxyl group, a cyano group, an amino group, an alkoxy group having 1 to 6 carbon atoms, an alkoxyalkoxy group having 2 to 8 carbon atoms, an alkoxyalkoxyalkoxy group having 3 to 15 carbon atoms, an alkoxycarbonyl group having 2 to 7 carbon atoms, an alkylcarbonyloxy group having 2 to 7 carbon atoms, and an alkoxycarbonyloxy group having 2 to 7 carbon atoms.

The above-mentioned rod-shaped liquid crystal compound preferably has an asymmetric structure. Herein, the asymmetric structure refers to a structure in which one structural part and the other structural part that are bonded to a mesogen group are different from each other with respect to the mesogen group as a center. For example, the asymmetric structure refers to a structure in the formula (1) wherein $R^3\text{-}C^3\text{-}D^3\text{-}C^5\text{-}$ and $\text{-}C^6\text{-}D^4\text{-}C^4\text{-}R^4$ have respective different structures with respect to the mesogen group M as a center. By using an asymmetric structure as the rod-shaped liquid crystal compound, the orientation uniformity can be further enhanced.

Preferable specific examples of the liquid crystal compound may include the following compound (B1) to (B9). As the liquid crystal compound, one type thereof may be solely used, and two or more types thereof may be used in combination at any ratio.

[Chemical formula 2]

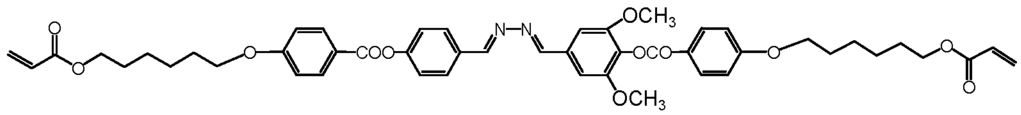
(B1)

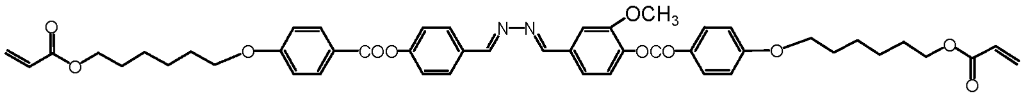
(B2)

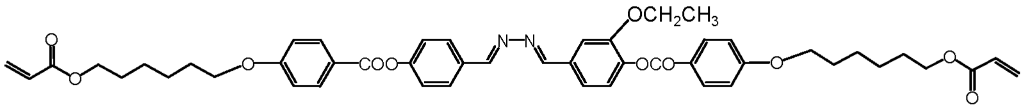
(B3)

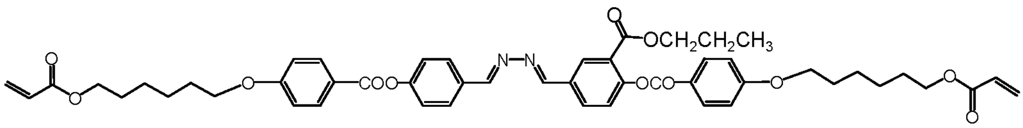
(B4)

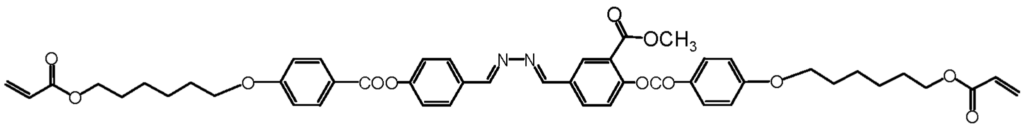
(B5)

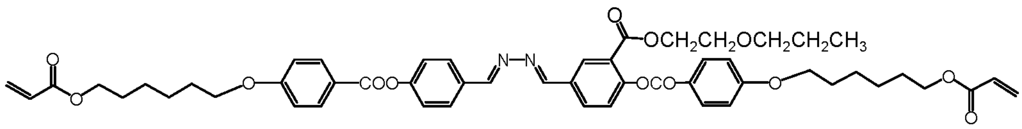
(B6)

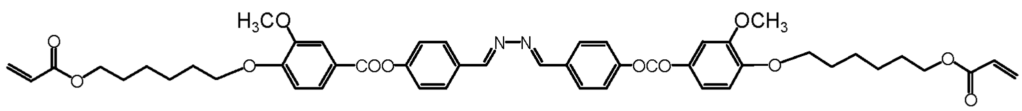
(B7)

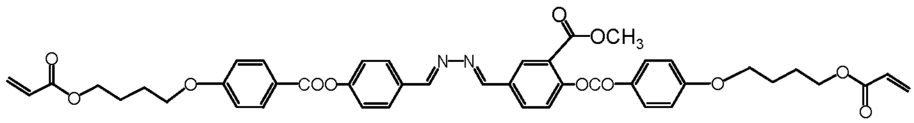
(B8)

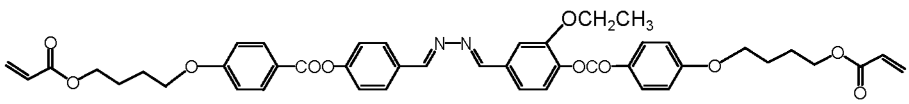
(B9)

Among these, a compound represented by the following formula (X1) is particularly preferable as the liquid crystal compound.

[Chemical formula 3]

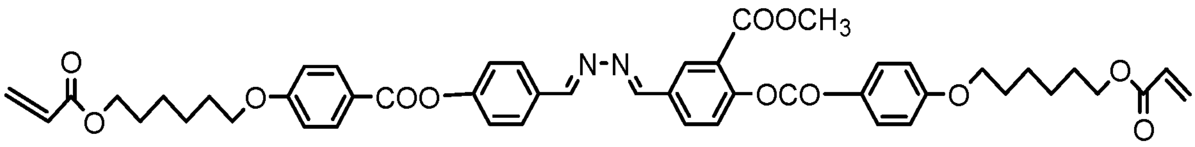

(X1)

As the liquid crystal compound, one type thereof may be solely used, and two or more types thereof may be used in combination at any ratio.

The molecular weight of the liquid crystal compound is preferably 600 or more, and is preferably 3000 or less, more preferably 2000 or less, and particularly preferably 1500 or less.

When the liquid crystal compound is a polymerizable compound having polymerizability, HSP of the liquid crystal compound having polymerizability is preferably 19 or more, more preferably 21 or more, and particularly preferably 23 or more, and is preferably 29 or less, more preferably 27 or less, and particularly preferably 25 or less.

When the liquid crystal compound is a polymerizable compound having polymerizability, logP of the liquid crystal compound having polymerizability is preferably 1.0 or more, more preferably 3.0 or more, and particularly preferably 5.0 or more, and is preferably 7.0 or less, more preferably 6.5 or less, and particularly preferably 6.1 or less.

(Orientation aid)

The liquid crystal composition may include an orientation aid as an optional component. The orientation aid is a compound capable of enhancing the orientation of the liquid crystal compound when combined with the liquid crystal compound, and usually does not have liquid crystallizability. The orientation aid preferably has polymerizability, and therefore is preferably a polymerizable compound.

Examples of the orientation aid may include a compound represented by the following formula (2):

$$R^1\text{-}A^1\text{-}B\text{-}A^2\text{-}R^2 \qquad (2).$$

In the formula (2), $R^1$ and $R^2$ each independently represent a group selected from the group consisting of a linear or branched alkyl group having 1 to 20 carbon atoms, a linear or branched alkylene oxide group having 1 to 20 carbon atoms, a hydrogen atom, a halogen atom, a hydroxyl group, a carboxyl group, a (meta)acryloyl group which may include an optional bonding group inserted therein, an epoxy group, a mercapto group, an isocyanate group, an amino group, and a cyano group.

The alkyl group and the alkylene oxide group may be unsubstituted or substituted with one or more halogen atoms. The above-mentioned halogen atom, hydroxyl group, carboxyl group, (meta)acryloyl group, epoxy group, mercapto group, isocyanate group, amino group, and cyano group may be bonded to an alkyl group having 1 to 2 carbon atoms and an alkylene oxide group.

Preferable examples of $R^1$ and $R^2$ may include a halogen atom, a hydroxyl group, a carboxyl group, a (meth)acryloyl group, an epoxy group, a mercapto group, an isocyanate group, an amino group, and a cyano group.

At least one of $R^1$ and $R^2$ is preferably a reactive group. Furthermore, it is more preferable that both $R^1$ and $R^2$ are reactive groups. Examples of the reactive group may include a carboxyl group, a (meth)acryloyl group, an epoxy group, a mercapto group, an isocyanate group, and an amino group.

In the formula (2), $A^1$ and $A^2$ each independently represent a group selected from the group consisting of a 1,4-phenylene group, a 1,4-cyclohexylene group, a cyclohexene-1,4-ylene group, a 4,4'-biphenylene group, a 4,4'-bicyclohexylene group, and a 2,6-naphthylene group. The above-mentioned 1,4-phenylene group, 1,4-cyclohexylene group, cyclohexene-1,4-ylene group, 4,4'-biphenylene group, 4,4'-bicyclohexylene group, and 2,6-naphthylene group may be unsubstituted or substituted with one or more substituents such as a halogen atom, a hydroxyl group, a carboxyl group, a cyano group, an amino group, an alkyl group having 1 to 10 carbon atoms, and a halogenated alkyl group. When two or more substituents are present in each of $A^1$ and $A^2$, they may be the same as, or different from, each other.

Particularly preferable examples as $A^1$ and $A^2$ may include a group selected from the group consisting of a 1,4-phenylene group, a 4,4'-biphenylene group, and a 2,6-naphthylene group. These aromatic ring skeletons are relatively rigid compared to alicyclic skeletons, have high affinity to mesogens of the rod-shaped liquid crystal compound, and have higher orientation uniformity.

In the formula (2), B is selected from the group consisting of a single bond, -O-, -S-, -S-S-, -CO-, -CS-, - OCO-, $-CH_2-$, $-OCH_2-$, -CH=N-N=CH-, -NHCO-, -O-(C=O)-O-, $-CH_2-(C=O)-O-$, and $-CH_2O-(C=O)-$. As B, a single bond, -O-(C=O)-, and -CH=N-N=CH- are particularly preferable.

Particularly preferable examples of the orientation aid represented by the formula (2) may include the following

compounds (A1) to (A10). Among the compounds (A1) to (A10) below, one or more types selected from the compounds (A2) and (A10) are particularly preferable. The compounds (A2) and (A10) can lower the expression temperature of the liquid crystal phase in the liquid crystal composition, and can maintain a wide temperature range in which the liquid crystal phase of the liquid crystal compound is exhibited.

[Chemical formula 4]

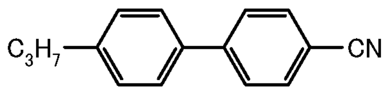
(A1)

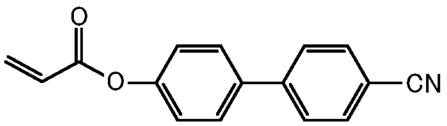
(A2)

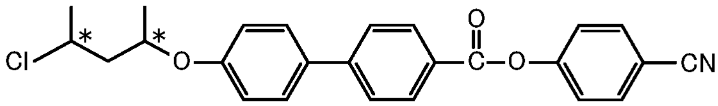
(A3)

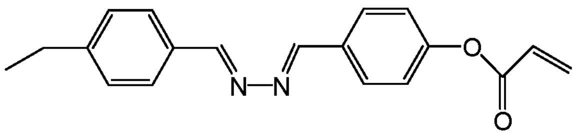
(A4)

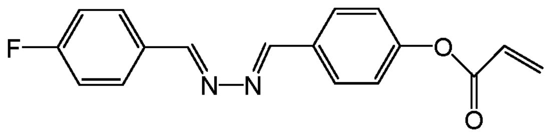
(A5)

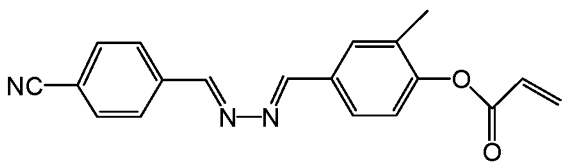
(A6)

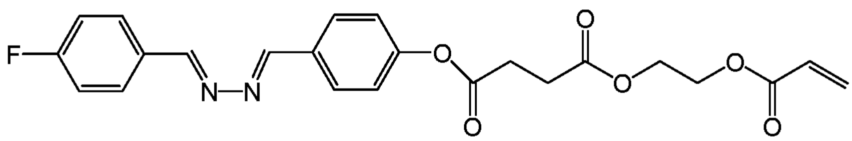
(A7)

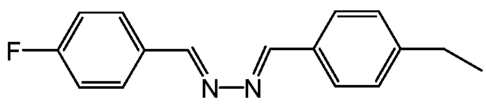
(A8)

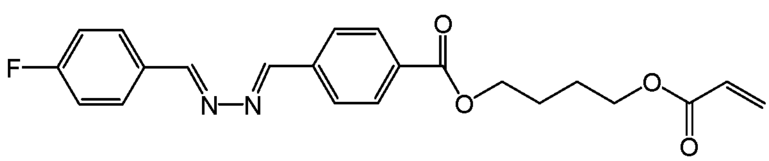
(A9)

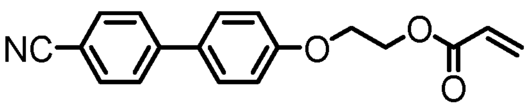
(A10)

In the above-described compound (A3), "*" represents a chiral center.

As the orientation aid, one type thereof may be solely used, and two or more types thereof may be used in combination at any ratio.

The molecular weight of the orientation aid is preferably smaller than that of the liquid crystal compound. For example, the molecular weight of the orientation aid is preferably less than 600, and the molecular weight of the liquid crystal compound is preferably 600 or more. In this case, the fluidity of the liquid crystal composition is increased, and the orientation uniformity can be improved. The lower limit of the molecular weight of the orientation aid is not particularly limited, and is preferably 30 or more.

When the orientation aid is a polymerizable compound having polymerizability, HSP of the orientation aid having polymerizability is preferably 19 or more, more preferably 21 or more, and particularly preferably 23 or more, and is preferably 29 or less, more preferably 27 or less, and particularly preferably 25 or less.

When the orientation aid is a polymerizable compound having polymerizability, logP of the orientation aid having polymerizability is preferably 1.0 or more, more preferably 3.0 or more, and particularly preferably 5.0 or more, and is preferably 7.0 or less, more preferably 6.5 or less, and particularly preferably 6.1 or less.

The amount of the orientation aid is preferably adjusted so that a weight ratio of the orientation aid to the liquid crystal compound (orientation aid / liquid crystal compound) falls within a particular range. Specifically, the range of the weight ratio (orientation aid / liquid crystal compound) is preferably 0.05 or more, more preferably 0.1 or more, and particularly preferably 0.15 or more, and is preferably 1 or less, more preferably 0.65 or less, and particularly preferably 0.55 or less. When the above-mentioned weight ratio is equal to or more than the lower limit value of the above-mentioned range, the orientation uniformity of the liquid crystal composition can be enhanced. When the weight ratio is equal to or less than the upper limit value, the orientation uniformity of the liquid crystal composition and the stability of the liquid crystal phase can be enhanced.

(Chiral agent)

The liquid crystal composition may include a chiral agent as an optional component. The chiral agent may have polymerizability, and thus may be a polymerizable compound.

Examples of the chiral agent may include those described in Japanese Patent Application Laid-Open No. 2005-289881 A, Japanese Patent Application Laid-Open No. 2004-115414 A, Japanese Patent Application Laid-Open No. 2003-66214 A, Japanese Patent Application Laid-Open No. 2003-313187 A, Japanese Patent Application Laid-Open No. 2003-342219 A, Japanese Patent Application Laid-Open No. 2000-290315 A, Japanese Patent Application Laid-Open No. Hei. 6-072962 A, U.S. Patent No. 6468444, International Publication No. 98/00428, or Japanese Patent Application Laid-Open No. 2007-176870 A. The chiral agent may be available as Paliocolor LC756 from BASF SE, for example. As the chiral agent, one type thereof may be solely used, and two or more types thereof may be used in combination at any ratio.

The chiral agent preferably has chirality. By using a chiral agent having chirality, it is possible to improve the circularly polarized light separation function of the cholesteric pigment. In general, the twisting direction of the molecule having cholesteric regularity contained in the liquid crystal cured product may be selected according to the type and structure of the chiral agent.

When the chiral agent is a polymerizable compound having polymerizability, HSP of the chiral agent having polymerizability is preferably 19 or more, more preferably 21 or more, and particularly preferably 23 or more, and is preferably 29 or less, more preferably 27 or less, and particularly preferably 25 or less.

When the chiral agent is a polymerizable compound having polymerizability, logP of the chiral agent having polymerizability is preferably 1.0 or more, more preferably 3.0 or more, and particularly preferably 5.0 or more, and is preferably 7.0 or less, more preferably 6.5 or less, and particularly preferably 6.1 or less.

The amount of the chiral agent may be optionally set within a range in which the desired optical performance is not decreased. The specific amount of the chiral agent is preferably 0.0001 part by weight or more, more preferably 0.01 part by weight or more, and particularly preferably 1 part by weight or more, and is preferably 50 parts by weight or less, more preferably 30 parts by weight or less, and particularly preferably 10 parts by weight or less, relative to 100 parts by weight of the liquid crystal compound.

(Surfactant)

The liquid crystal composition may include a surfactant as an optional component. With the surfactant, the orientation property of the liquid crystal composition can be improved, and planar uniformity can be enhanced when a layer of the liquid crystal composition is formed. The surfactant may have polymerizability, and thus may be a polymerizable compound.

As the surfactant, for example, a nonionic surfactant containing a siloxane or a fluorinated alkyl group in a hydrophobic group portion is preferably used. Among these, an oligomer having two or more hydrophobic group portions

within one molecule is particularly suitable. Specific examples of these surfactants may include PolyFox PF-151N, PF-636, PF-6320, PF-656, PF-6520, PF-3320, PF-651, and PF-652 available from OMNOVA Solutions Inc.; Ftergent FTX-209F, FTX-208G, and FTX-204D available from Neos Co., Ltd.; and Surflon KH-40 and S420 available from AGC Seimi Chemical Co., Ltd. As the surfactant, one type thereof may be solely used, and two or more types thereof may be used in combination at any ratio.

The amount of the surfactant is preferably 0.01 part by weight or more, more preferably 0.05 part by weight or more, and particularly preferably 0.10 part by weight or more, and is preferably 0.50 part by weight or less, more preferably 0.40 part by weight or less, and particularly preferably 0.30 part by weight or less, relative to 100 parts by weight of the liquid crystal compound. When the amount of the surfactant is equal to or more than the lower limit value of the above-mentioned range, the orientation regulating force at the air interface of the liquid crystal composition can be increased, and thus occurrence of orientation defects can be suppressed. When the amount thereof is equal to or less than the upper limit value of the above-mentioned range, formation of a micellar structure by an excess amount of the surfactant can be suppressed, and thus the surface state when the layer of the liquid crystal composition is formed can be improved.

(Polymerization initiator)

The liquid crystal composition may include a polymerization initiator as an optional component. As the polymerization initiator, a photopolymerization initiator is usually used. As the photopolymerization initiator, a compound capable of generating a radical or an acid by ultraviolet or visible light can be used.

Specific examples of the photopolymerization initiator may include benzoin, benzyl dimethyl ketal, benzophenone, biacetyl, acetophenone, Michler's ketone, benzyl, benzyl isobutyl ether, tetramethyl thiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propane-1-one, 1-(4-isopropylphenyl)-2-hydroxy-2-methylpropane-1-one, thioxanthone, 2-chlorothioxanthone, 2-methylthioxanthone, 2,4-diethylthioxanthone, methylbenzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, p,p'-dichlorobenzophenone, p,p'-bisdiethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1[4-(methylthio)phenyl]-2-morpholinopropane-1-one, 2-benzyl-2-dimethylamino-1-(4-morpholinophenyl)-butane-1-one, anthracene benzophenone, α-chloroanthraquinone, diphenyldisulfide, hexachlorobutadiene, pentachlorobutadiene, octachlorobutene, 1-chlormethylnaphthalene, carbazoleoxime compounds such as 1,2-octanedione-1-[4-(phenylthio)-2-(o-benzoyloxime)] and 1-[9-ethyl-6-(2-methylbenzoyl)-9H-carbazol-3-yl]ethanone 1-(o-acetyloxime), (4-methylphenyl) [4-(2-methylpropyl)phenyl]iodonium hexafluorophosphate, 3-methyl-2-butynyltetramethylenesulfonium hexafluoroantimonate, and diphenyl-(p-phenylthiophenyl)sulfonium hexafluoroantimonate. As the polymerization initiator, one type thereof may be solely used, and two or more types thereof may be used in combination at any ratio. If necessary, the curability may be controlled by using a known photosensitizer or a tertiary amine compound as a polymerization accelerator.

The amount of the polymerization initiator is preferably 0.1 part by weight or more, more preferably 0.5 part by weight or more, and particularly preferably 1 part by weight or more, and is preferably 30 parts by weight or less, more preferably 20 parts by weight or less, and particularly preferably 10 parts by weight or less, relative to 100 parts by weight of the liquid crystal compound. When the amount of the polymerization initiator is equal to or more than the lower limit value of the above-mentioned range, the degree of polymerization can be increased. When the amount thereof is equal to or less than the upper limit value, orientation of the liquid crystal compound can be favorable, and thus the liquid crystal phase of the liquid crystal composition can be stabilized.

(Other optional component)

The liquid crystal composition may further contain other optional components as necessary. Examples of the optional component may include a cross-linking agent; a polymerization inhibitor for improving pot life; and an antioxidant, an ultraviolet absorber, and a light stabilizer, for improving durability. As the optional component, one type thereof may be solely used, and two or more types thereof may be used in combination at any ratio. The amount of these optional components may be freely set within a range in which the desired optical performance is not decreased. For these optional components, reference may be made to International Publication No. 2016/002765.

(Polymerizable compound)

The liquid crystal composition includes one or two or more polymerizable compounds. The above-mentioned polymerizable compound included in the liquid crystal composition may be a non-volatile component that is not removed

by drying at the time of curing the liquid crystal composition. Thus, the polymerizable compound or a polymer thereof can remain in a liquid crystal cured product obtained by curing the liquid crystal composition. The non-volatile component usually has a high boiling point. For example, the non-volatile component may have a boiling point of 230°C or higher in a 1 atm environment.

The polymerizable compound included in the liquid crystal composition may have the weighted average HSP that satisfies the above-mentioned requirement (i) in relation to HSP of the stabilizer. The weighted average HSP of the polymerizable compound represents the weighted average of HSP, based on the weight, of the polymerizable compound included in the liquid crystal composition. Thus, for example, in a case where a liquid crystal composition includes three polymerizable compounds having HSP of h1, h2, and h3 with the weight of m1, m2, and m3, the weighted average HSP of the polymerizable compounds included in the liquid crystal composition can be obtained by "((h1 × m1) + (h2 × m2) + (h3 × m3))/(m1 + m2 + m3))".

A range of the weighted average HSP of the polymerizable compound included in the liquid crystal composition is not particularly limited as long as the advantageous effects of the present invention can be obtained. The weighted average HSP is preferably 21 or more, more preferably 22 or more, and particularly preferably 23 or more, and is preferably 26 or less, more preferably 25 or less, and particularly preferably 24 or less.

The polymerizable compound included in the liquid crystal composition may have the weighted average logP that satisfies the above-mentioned requirement (ii) in relation to logP of the stabilizer. The weighted average logP of the polymerizable compound represents the weighted average of logP, based on the weight, of the polymerizable compound included in the liquid crystal composition. Thus, for example, in a case where a liquid crystal composition includes three polymerizable compounds having logP of L1, L2, and L3 with the weight of m1, m2, and m3, the weighted average HSP of the polymerizable compounds included in the liquid crystal composition can be obtained by "((L1 × m1) + (L2 × m2) + (L3 × m3))/(m1 + m2 + m3))".

A range of the weighted average logP of the polymerizable compound included in the liquid crystal composition is not particularly limited as long as the advantageous effects of the present invention can be obtained. The logP is preferably 3.0 or more, more preferably 4.0 or more, and particularly preferably 5.0 or more, and is preferably 6.5 or less, more preferably 6.0 or less, and particularly preferably 5.5 or less.

The polymerizable compound preferably includes a main component of non-volatile components included in the liquid crystal composition. Hereinafter, the polymerizable compound as the main component of the non-volatile components included in the liquid crystal composition may be referred to as a "main component monomer". Unless otherwise specified, the main component monomer represents a compound with the largest amount among the non-volatile components included in the liquid crystal composition. The amount of the main component monomer included in the liquid crystal composition is preferably 50% by weight or more, more preferably 60% by weight or more, and particularly preferably 70% by weight or more, relative to 100% by weight of the non-volatile components in the liquid crystal composition. When the polymerizable compound includes the above-mentioned main component monomer, it is possible to effectively suppress a change in the wavelength of the circularly polarized light, which can be reflected by the cholesteric pigment, in a high-temperature and high-humidity environment. Although there is no particular upper limit, it is usually 100% by weight or less.

The main component monomer is preferably a liquid crystal compound. When the main component monomer is a liquid crystal compound, it is possible to effectively suppress a change in the wavelength of the circularly polarized light, which can be reflected by the cholesteric pigment, in a high-temperature and high-humidity environment. In particular, the main component monomer is more preferably the above-mentioned rod-shaped liquid crystal compound, still more preferably the liquid crystal compound represented by the above-mentioned formula (X1). When the polymerizable compound includes the liquid crystal compound, it is preferable that the polymerizable compound other than the liquid crystal compound can react with and bond to the liquid crystal compound at the time of curing the liquid crystal composition. Thus, the polymerizable compounds are preferably selected from the group consisting of a polymerizable liquid crystal compound and a compound capable of reacting with and bonding to the liquid crystal compound.

(Characteristics of cholesteric pigment)

Since the cholesteric pigment includes the liquid crystal cured product as the cured product of the above-mentioned liquid crystal composition, the cholesteric pigment can selectively reflect circularly polarized light having one rotation direction and transmit circularly polarized light having a rotation direction opposite to the one rotation direction in the selective reflection wavelength range. The wider the wavelength width of the selective reflection wavelength range of the cholesteric pigment is, the higher the visual recognizability is. Thus, the wavelength width is preferably 50 nm or more, more preferably 60 nm or more, and particularly preferably 70 nm or more. From the viewpoint of achieving reflection of light in a wide visible light wavelength range by the thin cholesteric pigment, the wavelength width is preferably 500 nm or less, more preferably 400 nm or less, and particularly preferably 300 nm or less.

From the viewpoint of allowing visual recognition with the naked eye, the selective reflection wavelength range

preferably falls within a visible wavelength range. That is, the cholesteric pigment preferably has a circularly polarized light separation function in the visible wavelength range. The visible wavelength range usually refers to a wavelength range of 400 nm or more and 780 nm or less. The selective reflection wavelength range of the cholesteric pigment may include the entire visible wavelength range.

A specific wavelength at which the circularly polarized light separation function is exhibited generally depends on a pitch of a helical structure in the liquid crystal cured product included in the cholesteric pigment. The pitch of the helical structure is a distance in a plane normal direction, from the start of gradual shifting of the direction of molecular axes with an angle in the helical structure as proceeding through planes, to the return to the original direction of molecular axes. By changing the size of the pitch of the helical structure, the wavelength at which the circularly polarized light separation function is exhibited can be changed. As a method for adjusting the pitch, for example, the method described in Japanese Patent Application Laid-Open No. 2009-300662 A may be used. Specific examples may include a method of adjusting the type of a chiral agent and a method of adjusting the amount of a chiral agent in the liquid crystal composition. In particular, when the size of the pitch of the helical structure changes continuously in the layer, the circularly polarized light separation function over a wide wavelength range can be obtained by a single layer of the liquid crystal cured product.

The cholesteric pigment capable of exhibiting the circularly polarized light separation function over a wide wavelength range can be achieved, for example, by a layer of the liquid crystal cured product in which the size of the pitch of the helical structure changes in a stepwise manner. The layer of the liquid crystal cured product in which the pitch of the helical structure changes in a stepwise manner can be obtained, for example, by layering a plurality of layers of the liquid crystal cured product with different pitches of the helical structure. The layering can be performed by producing the plurality of layers of the liquid crystal cured product with different pitches of the helical structure in advance and then bonding each of the layers via a tackiness agent or an adhesive. Alternatively, the layering can also be performed by forming a layer of a certain liquid crystal cured product and then successively forming another layer of a liquid crystal cured product on the existing layer.

The cholesteric pigment capable of exhibiting the circularly polarized light separation function over a wide wavelength range can be achieved, for example, by a layer of a liquid crystal cured product in which the size of the pitch of the helical structure changes continuously. The layer of the liquid crystal cured product in which the size of the pitch of the helical structure changes continuously can be obtained, for example, by subjecting a layer of a liquid crystal composition to a band-broadening treatment including an active energy ray irradiation treatment and/or a heating treatment one or more times, and then curing the layer of the liquid crystal composition. According to the above-mentioned band-broadening treatment, the pitch of the helical structure can be changed continuously in the thickness direction. Therefore, it is possible to expand the wavelength range (reflection band range) in which the layer of the liquid crystal cured product can exhibit the circularly polarized light separation function. Thus, such a treatment is called a band-broadening treatment.

The layer of the liquid crystal cured product may be a layer of a single-layer structure consisting of only one layer, or a layer of a multi-layer structure consisting of two or more layers. The number of layers included in the layer of the liquid crystal cured product is preferably 1 to 100, more preferably 1 to 20, from the viewpoint of easiness in the production.

The thickness of the layer of the liquid crystal cured product is preferably 2 $\mu$m or more, and more preferably 3 $\mu$m or more, and is preferably 1000 $\mu$m or less, and more preferably 500 $\mu$m or less. When the thickness of the layer of the liquid crystal cured product is equal to or more than the lower limit value of the above-mentioned range, the reflectance of one of clockwise circularly polarized light and counterclockwise circularly polarized light caused by the cholesteric pigment can be increased. On the other hand, when the thickness of the layer of the liquid crystal cured product is equal to or less than the upper limit value of the above-mentioned range, the transmittance of the other of the clockwise circularly polarized light and the counterclockwise circularly polarized light can be increased, which improves the transparency of the cholesteric pigment when it is observed through an appropriate circularly polarizing plate.

The cholesteric pigment may include an optional element in combination with the liquid crystal cured product as necessary. For example, the cholesteric pigment may include a protective layer covering the liquid crystal cured product.

The cholesteric pigment usually has a particle shape, and particularly preferably has a flake-shape. Usually, a main surface of the flake-shaped cholesteric pigment and a layer plane of the display layer including the cholesteric pigment are oriented parallel or nearly parallel to each other by shearing force applied when the display layer is formed. Thus, the cholesteric pigment can effectively receive light entering the display layer, allowing the circularly polarized light to be efficiently reflected, which can improve visual recognizability of the cholesteric pigment.

The flake-shaped cholesteric pigment preferably has a large aspect ratio. The aspect ratio of the cholesteric pigment is obtained by dividing the average particle diameter of the cholesteric pigment by the thickness of the cholesteric pigment. The specific aspect ratio of the cholesteric pigment is preferably 3 or more, more preferably 5 or more, and particularly preferably 10 or more, and is preferably 40 or less, more preferably 30 or less, and particularly preferably

20 or less.

The thickness of the cholesteric pigment can be appropriately set so as to obtain desired optical properties. Specifically, the thickness of the cholesteric pigment is preferably 1 μm or more, more preferably 2 μm or more, and particularly preferably 3 μm or more, and is preferably 20 μm or less, more preferably 10 μm or less, and particularly preferably 5 μm or less.

The average particle diameter of the cholesteric pigment is preferably 30 μm or more, more preferably 40 μm or more, and particularly preferably 50 μm or more, and is preferably 150 μm or less, more preferably 120 μm or less, and particularly preferably 100 μm or less. When the average particle diameter of the cholesteric pigment is equal to or more than the lower limit value of the above-mentioned range, visual recognizability of the cholesteric pigment can be particularly effectively increased. When the average particle diameter of the cholesteric pigment is equal to or less than the upper limit value of the above-mentioned range, the applying property or printability of the ink composition can be increased.

The average particle diameter of the cholesteric pigment is desirably equal to or greater than the thickness of the display layer that is formed using the ink composition. In this case, the flake-shaped cholesteric pigment tends to be oriented such that the main surface of the cholesteric pigment and the layer plane of the display layer are parallel to each other or form an acute angle. As a result, the cholesteric pigment can effectively receive light entering the display layer, and thus it is possible to improve the visual recognizability of the cholesteric pigment.

The average particle diameter of the cholesteric pigment may be measured with a laser diffraction/scattering particle size distribution analyzer ("LASER MICRON SIZER LMS-3000" manufactured by Seishin Enterprise Co., Ltd.). As the average particle diameter, a value of the median diameter D50 at which the cumulative volume is 50% in the particle diameter distribution measured using the above-mentioned particle size distribution analyzer may be adopted.

The cholesteric pigment can be produced, for example, by a production method including a step of forming a liquid crystal cured product and a step of pulverizing the liquid crystal cured product. In particular, in the production of the flake-shaped cholesteric pigment, it is preferable to adopt a production method including a step of forming a layer of a liquid crystal cured product and a step of pulverizing the layer of the liquid crystal cured product.

There is no limitation on the production method of the liquid crystal cured product. The liquid crystal cured product can be produced, for example, by a method including a step of orienting a liquid crystal compound included in a liquid crystal composition and a step of curing the liquid crystal composition in this order. When a layer of the liquid crystal cured product is formed, the production method of the liquid crystal cured product may include a step of applying a liquid crystal composition onto an appropriate support surface to form a layer of the liquid crystal composition prior to the step of orienting the liquid crystal compound. Specific examples of the production method of the liquid crystal cured product may include the methods described in Japanese Patent Application Laid-Open No. 2014-174471 A and Japanese Patent Application Laid-Open No. 2015-27743 A.

After the production of the liquid crystal cured product, the resulting liquid crystal cured product is pulverized to obtain a cholesteric pigment including the liquid crystal cured product. The production method of the cholesteric pigment may further include an optional step. For example, the production method may include a step of classifying the cholesteric pigment after pulverization. As the production method of the cholesteric pigment, for example, the production method described in Japanese Patent No. 6142714 may be adopted.

(Amount of cholesteric pigment)

The amount of the cholesteric pigment included in the ink composition is preferably 3% by weight or more, more preferably 5% by weight or more, and still more preferably 10% by weight or more, and is preferably 40% by weight or less, more preferably 30% by weight or less, and particularly preferably 20% by weight or less, relative to 100% by weight of the ink composition.

[3. Stabilizer (non-volatile organic compound)]

The stabilizer is a non-volatile organic compound satisfying at least one of the above-described requirements (i) and (ii). Herein, the organic compound as the stabilizer being "non-volatile" means that the organic compound is not removed by drying and can remain in the display layer during the formation of the display layer by the ink composition. Such a stabilizer having non-volatility usually has a high boiling point. For example, the stabilizer may have a boiling point of 230°C or higher in a 1 atm environment.

The requirement (i) to be satisfied by the stabilizer will be described in detail. The absolute value $|\Delta HSP_1|$ of the difference between the weighted average HSP of the polymerizable compound included in the liquid crystal composition as a raw material of the liquid crystal cured product contained in the cholesteric pigment and HSP of the stabilizer is usually 0.0 or more and is usually 3.0 or less, preferably 2.0 or less, more preferably 1.5 or less, still more preferably 1.0 or less, and particularly preferably 0.5 or less.

The weighted average HSP of the polymerizable compound included in the liquid crystal composition is represented by "HSP(ave)". The HSP of the stabilizer is represented by "HSP (b)". In this case, the difference between the weighted average HSP of the polymerizable compound and the HSP of the stabilizer is represented by "HSP(ave) - HSP(b)", and the absolute value $|\Delta HSP_1|$ of the difference is represented by "|HSP(ave) - HSP(b)|".

Next, the requirement (ii) to be satisfied by the stabilizer will be described in detail. The absolute value $|\Delta logP_1|$ of the difference between the weighted average logP of the polymerizable compound included in the liquid crystal composition as a raw material of the liquid crystal cured product contained in the cholesteric pigment and logP of the stabilizer is usually 0.0 or more and is usually 1.0 or less, preferably 0.5 or less.

The weighted average logP of the polymerizable compound included in the liquid crystal composition is represented by "logP(ave)". LogP of the stabilizer is represented by "logP (b)". In this case, the difference between the weighted average logP of the polymerizable compound and the logP of the stabilizer is represented by "logP(ave) - logP(b)", and the absolute value $|\Delta logP_1|$ of the difference is represented by "|logP(ave) - logP(b)|".

The stabilizer may satisfy one of the above-mentioned requirements (i) and (ii), and preferably satisfies both of the requirements. When a stabilizer satisfying both the requirement (i) and the requirement (ii) is used, it is possible to effectively suppress a change in the wavelength of the circularly polarized light, which can be reflected by the cholesteric pigment, in a high-temperature and high-humidity environment.

Furthermore, a square root of the sum of the squares $\{|\Delta HSP_1|^2 + |\Delta logP_1|^2\}^{1/2}$ of the above-mentioned absolute value $|\Delta HSP_1|$ and absolute value $|\Delta logP_1|$ preferably falls within a particular range. Specifically, the square root of the sum of the squares $\{|\Delta HSP_1|^2 + |\Delta logP_1|^2\}^{1/2}$ is preferably 5.0 or less, and more preferably 1.5 or less, and is usually 0.0 or more. When the square root of the sum of the squares $\{ |\Delta HSP_1|^2 + |\Delta logP_1|^2\}^{1/2}$ falls within the above-mentioned range, it is possible to effectively suppress a change in the wavelength of the circularly polarized light, which can be reflected by the cholesteric pigment, in a high-temperature and high-humidity environment.

The stabilizer is preferably the same compound as the compound included in the liquid crystal composition as a raw material of the liquid crystal cured product contained in the cholesteric pigment. Specifically, the same compound as the stabilizer is preferably included in the liquid crystal composition. Among these, the stabilizer is more preferably the same compound as the polymerizable compound included in the liquid crystal composition. Specifically, it is more preferable that the same compound as the stabilizer is included in the polymerizable compound of the liquid crystal composition. Furthermore, it is particularly preferable that the stabilizer is the same compound as the main component monomer. In this case, it is possible to effectively suppress a change in the wavelength of circularly polarized light, which can be reflected by the cholesteric pigment, in a high-temperature and high-humidity environment.

The stabilizer is preferably a liquid crystal compound. In this case, it is possible to effectively suppress a change in the wavelength of circularly polarized light, which can be reflected by the cholesteric pigment, in a high-temperature and high-humidity environment.

The amount of the stabilizer is preferably 0.5 part by weight or more, more preferably 1.0 part by weight or more, and particularly preferably 1.5 parts by weight or more, and is preferably 10 parts by weight or less, more preferably 5 parts by weight or less, and particularly preferably 3 parts by weight, relative to 100 parts by weight of the cholesteric pigment. When the amount of the stabilizer is within the above-mentioned range, it is possible to effectively suppress a change in the wavelength of circularly polarized light, which can be reflected by the cholesteric pigment, in a high-temperature and high-humidity environment.

[4. Organic solvent]

The ink composition according to an embodiment of the present invention preferably contains an organic solvent as an optional component. The organic solvent can enhance the fluidity of the ink composition and improve applying property and printability. In the ink composition including an organic solvent, the cholesteric pigment is usually dispersed in the organic solvent. In addition, the stabilizer is usually dissolved or dispersed in the organic solvent. Since the organic solvent usually has volatility, the organic solvent is not included in the display layer formed from the ink composition or is contained in a small amount.

Examples of the organic solvent may include an organic solvent such as a ketone compound, an alkyl halide compound, an amide compound, a sulfoxide compound, a heterocycle compound, a hydrocarbon compound, an ester compound, and an ether compound. As the organic solvent, one type thereof may be solely used, and two or more types thereof may be used in combination at any ratio.

The organic solvent preferably includes a diluent. A diluent refers to an organic solvent that satisfies the following requirement (iii).

Requirement (iii) : an absolute value $|\Delta HSP_2|$ of the difference between the weighted average HSP of the polymerizable compound included in the liquid crystal composition as a raw material of the liquid crystal cured product contained in the cholesteric pigment and HSP of the diluent is greater than 2.

The requirement (iii) to be satisfied by the diluent will be described in detail. The absolute value $|\Delta HSP_2|$ of the

difference between the weighted average HSP of the polymerizable compound and HSP of the diluent is preferably large, and is usually more than 2.0, preferably more than 3.0, and particularly preferably more than 5.0.

The weighted average HSP of the polymerizable compound included in the liquid crystal composite as a raw material of the liquid crystal cured product contained in the cholesteric pigment is represented by "HSP(ave)". The HSP of the diluent is represented by "HSP(c)". In this case, the difference between the weighted average HSP of the polymerizable compound and the HSP of the diluent is represented by "HSP(ave) - HSP(c)", and the absolute value $|\Delta HSP_2|$ of the difference is represented by "|HSP(ave) - HSP(c)|".

When the ink composition includes a diluent, it is possible to suppress a change in the wavelength of circularly polarized light, which can be reflected by the cholesteric pigment, due to the preparation of the ink composition and the formation of the display layer. Details will be described as follows. In general, the wavelength of circularly polarized light that can be reflected by the cholesteric pigment may vary by mixing with components other than the cholesteric pigment included in the ink composition. This change may cause an unintended change in the color of the display layer. On the other hand, when a diluent satisfying the requirement (iii) is used, the above-mentioned change can be suppressed.

The HSP of the diluent is preferably 26.0 or more, and more preferably 26.5 or more. The upper limit of the HSP of the diluent may be, for example, 47 or less. The HSP of the diluent is preferably 18 or less, more preferably 17.5 or less, and particularly preferably 17.0 or less. The lower limit of the HSP of the diluent may be, for example, 15.0 or more. When a diluent having HSP falling within such a range is used, a change in the wavelength of circularly polarized light, which can be reflected by the cholesteric pigment, due to preparation of the ink composition and the formation of the display layer can be effectively suppressed.

The amount of the organic solvent contained in the ink composition is preferably 40 parts by weight or more, more preferably 60 parts by weight or more, and particularly preferably 80 parts by weight or more, and is preferably 1000 parts by weight or less, more preferably 800 parts by weight or less, and particularly preferably 600 parts by weight or less, relative to 100 parts by weight of the cholesteric pigment. When the amount of the organic solvent falls within the above-mentioned range, the applying property of the ink composition can be improved.

When the organic solvent contains a diluent, the amount of the diluent contained in the ink composition is preferably 30 parts by weight or more, more preferably 50 parts by weight or more, and particularly preferably 100 parts by weight or more, and is preferably 500 parts by weight or less, more preferably 300 parts by weight or less, and particularly preferably 200 parts by weight or less, relative to 100 parts by weight of the cholesteric pigment. When the amount of the diluent falls within the above-mentioned range, a change in the wavelength of circularly polarized light, which can be reflected by the cholesteric pigment, due to preparation of the ink composition and the formation of the display layer can be effectively suppressed.

[5. Binder]

The ink composition according to an embodiment of the present invention may include, as an optional component, a binder for binding a cholesteric pigment in a display layer. As the binder, a polymer is usually used. Examples of the polymer may include a polyester-based polymer, an acryl-based polymer, a polystyrene-based polymer, a polyamide-based polymer, a polyurethane-based polymer, a polyolefin-based polymer, a polycarbonate-based polymer, and a polyvinyl-based polymer. As the binder, one type thereof may be solely used, and two or more types thereof may be used in combination at any ratio.

The amount of the binder is preferably 50 parts by weight or more, more preferably 100 parts by weight or more, and particularly preferably 200 parts by weight or more, and is preferably 1000 parts by weight or less, more preferably 800 parts by weight or less, and particularly preferably 700 parts by weight or less, relative to 100 parts by weight of the cholesteric pigment. When the amount of the binder falls within the above-mentioned range, the applying property of the ink composition can be improved, and the cholesteric pigment can be stably bound.

The ink composition may include monomers of the polymer as the binder, instead of, or in combination with, the polymer. In this case, the ink composition is applied and dried, and then the monomer is polymerized to bind the cholesteric pigment with the binder. The ink composition including the monomer preferably further contains a polymerization initiator.

[6. Other optional component]

The ink composition according to an embodiment of the present invention may further include an optional component in addition to the above-mentioned components. Examples of the optional component may include an antioxidant, an ultraviolet absorber, a light stabilizer, and a bluing agent. As these components, one type thereof may be solely used, and two or more types thereof may be used in combination at any ratio.

[7. Physical properties of ink composition]

The ink composition according to one embodiment of the present invention may be a material in a fluid state. The term "fluid state" described herein includes not only a liquid state with low viscosity but also a gel state with high viscosity. A specific viscosity of the ink composition may be appropriately adjusted depending on the use of the ink composition.

[8. Use method and effect of ink composition]

The ink composition according to an embodiment of the present invention is used for forming a display layer. For example, the ink composition is applied onto an appropriate member and cured by a method such as drying, as necessary, to form the display layer. The display layer thus formed may include the cholesteric pigment and the stabilizer. Since the cholesteric pigment can exhibit the circularly polarized light separation function of selectively reflecting the circularly polarized light in the selective reflection wavelength range, the display layer including the cholesteric pigment can also exhibit the same circularly polarized light separation function as that of the cholesteric pigment. Thus, the display layer can be visually recognized as a layer of a color corresponding to the selective reflection wavelength range.

Since the ink composition includes the stabilizer in combination with the cholesteric pigment, it is possible in a high-temperature and high-humidity environment to suppress a change of the wavelength of the circularly polarized light that can be reflected by the cholesteric pigment included in the display layer produced using such an ink composition. For example, when the display layer is stored in a high-temperature and high-humidity environment with a temperature of 90°C and a humidity of 80% RH, the amount of change (amount of color shift) in the central wavelength of the selective reflection range can be reduced. Thus, it is possible to suppress an unintended color change of the display layer in a high-temperature and high-humidity environment.

For example, when the display layer formed by printing the ink composition is subjected to a durability test in which the display layer is stored for 14 days in an environment with a temperature of 90°C and a humidity of 80% RH by the method described in the examples below, the amount of change in the selective reflection wavelength range of the cholesteric pigment included in the display layer can be reduced. Specifically, the amount of change can be preferably 15 nm or less, more preferably 10 nm or less, and particularly preferably 5 nm or less. The lower limit of the amount of change is usually 0 nm.

The present inventor speculates that the mechanism by which the ink composition according to an embodiment of the present invention can exhibit the above-mentioned advantageous effects is as follows. However, the technical scope of the present invention is not limited by the mechanism described below.

When the liquid crystal composition is cured, a part or all of the polymerizable compound undergoes a reaction such as polymerization and crosslinking to be bonded to each other. As a result, the liquid crystal cured product is obtained. Thus, the liquid crystal cured product includes a polymer of the polymerizable compound and may further include the unreacted polymerizable compound. In the liquid crystal cured product included in the cholesteric pigment, a part or all of the polymerizable compound and the polymer thereof are oriented with cholesteric regularity. In general, while a molecule of a polymer is restricted by bonding, an unreacted polymerizable compound is not restricted by bonding. Thus, some molecules of the unreacted polymerizable compound can be mobile.

For example, from sites to be occupied by molecules oriented in a helical structure corresponding to the cholesteric regularity, a part of molecules of the polymerizable compound may migrate, and thus the molecules that had occupied the sites may be lost to form empty spaces. In this case, the pitch of the helical structure may change by the empty spaces at the sites.

For example, molecules which are not oriented with the cholesteric regularity may migrate and, as a result, cause a change in the pitch of the helical structure of molecules that are oriented with the cholesteric regularity. To give a specific example, a molecule (molecule not oriented with the cholesteric regularity) at a site in a gap between molecules oriented so as to have a helical structure may migrate and form an empty space at the above-mentioned site in the gap. In this case, the helical structure may change so as to fill the above-mentioned empty site, resulting in a change in the pitch of the helical structure.

When the pitch of the helical structure with the cholesteric regularity changes, the wavelength of the circularly polarized light that can be reflected by the liquid crystal cured product changes. Thus, the wavelength of the circularly polarized light that can be reflected by the cholesteric pigment may change. In a high-temperature and high-humidity environment, the polymerizable compound that have not polymerized tend to migrate and easily exude out of the liquid crystal cured product. Thus, conventionally, the wavelength of the circularly polarized light that can be reflected by the cholesteric pigment can change significantly in a high-temperature and high-humidity environment.

In contrast, the ink composition according to the present embodiment includes the stabilizer having HSP or logP close to the weighted average HSP or the weighted average logP of the polymerizable compounds. The display layer obtained from this ink composition includes the above-mentioned stabilizer in combination with the cholesteric

pigment. The stabilizer has exudation property similar to those of the polymerizable compounds. Thus, the stabilizer can suppress exuding of the polymerizable compound from the liquid crystal cured product included in the cholesteric pigment by solution equilibrium, thereby making a change in the pitch of the helical structure with the cholesteric regularity less likely to occur. Even if a part of the molecules of the polymerizable compound exudes and the empty spaces are formed in the sites in the helical structure or its surrounding, such empty sites can be easily filled with molecules of the stabilizer. Thus, even if the pitch of the helical structure changes, the amount of change can be reduced. Since the change in the wavelength of the circularly polarized light that can be reflected by the liquid crystal cured product can be suppressed because of the above-mentioned reason, the change in the wavelength of the circularly polarized light that can be reflected by the cholesteric pigment including the liquid crystal cured product can be suppressed.

The display layer can be formed on a surface of a member, on which the display layer is desired to be formed, by a method including applying the ink composition. The application method is not particularly limited, and a printing method is preferable. Furthermore, the method for forming the display layer may include a step of curing the applied ink composition. For example, in a case where the ink composition includes an organic solvent, the ink composition can be cured by drying to remove the organic solvent, thereby obtaining the display layer. Furthermore, in a case where the ink composition includes monomers corresponding to a binder, the method for forming the display layer may include a step of curing the ink composition by polymerizing the above-mentioned monomers.

[9. Article comprising display layer formed from ink composition]

The above-mentioned ink composition can be used for producing, for example, an article comprising a display layer. The above-mentioned article includes a member having a surface and a display layer formed on the surface of the member. Since the display layer is formed from the ink composition, the display layer includes the cholesteric pigment and the stabilizer. Thus, the display layer can exhibit the circularly polarized light separation function that selectively reflects the circularly polarized light in the selective reflection wavelength range. Furthermore, the display layer can suppress a change in the wavelength of the circularly polarized light that can be selectively reflected in a high-temperature and high-humidity environment.

The member on which the display layer is formed is not limited, and a wide range of members can be adopted. Examples of the member may include, but are not limited to, textile products such as clothes; leather products such as a bag or a shoe; metal products such as a screw; paper products such as a price tag; and rubber products such as a tire.

The display layer may be formed as a layer having an any planar shape. The term "planar shape" represents a shape of the display layer as viewed in the thickness direction. Examples of the planar shape of the display layer may include a diagram, a letter, a numeral, a symbol, and an identifier (such as barcode) intended for providing design or information.

The above-mentioned article may be produced, for example, by a production method including applying the ink composition onto the surface of the member. The method for producing the article may include a step of curing, after application of the ink composition, the applied ink composition.

The display layer included in the above-mentioned article may be used, for example, as a security display layer for preventing counterfeiting. For example, the cholesteric pigment can change a visible reflection color depending on a viewing angle (particularly, an incident angle) due to the cholesteric regularity. Thus, if the color of the cholesteric pigment changes depending on the viewing angle upon observation of the display layer, the article can be determined to be authentic.

For example, the cholesteric pigment can selectively reflect only the circularly polarized light having one of the clockwise rotation direction and counterclockwise rotation direction. Thus, an image visually recognized through a clockwise circularly polarized light and an image visually recognized through a counterclockwise circularly polarized light may appear differently. Thus, if the image visually recognized through the clockwise circularly polarizing plate and the image visually recognized through the counterclockwise circularly polarizing plate are different from each other as described above, the article including the display layer can be determined to be authentic.

An article may be produced as a display medium for achieving a novel display mode by using the circularly polarized light separation function possessed by the cholesteric pigment.

[Examples]

Hereinafter, the present invention will be specifically described by illustrating Examples. However, the present invention is not limited to the Examples described below. The present invention may be freely modified for implementation without departing from the scope of claims of the present invention and its equivalents.

In the following description, "%" and "part" representing quantity are on the basis of weight, unless otherwise specified. The operations described below were performed under the conditions of normal temperature and normal pressure in the atmosphere unless otherwise specified.

[Calculation method of HSP value]

An HSP value means the Hildebrand solubility parameter. This HSP value was calculated by the Y-MB method using the SP value calculation software "HSPiP ver.4.1.7" (https://pirika.com/NewHP/Y-MB/Y-MB.html).

[Measurement method of logP value]

A sample solution including 1% by weight of a sample compound was prepared. Tetrahydrofuran or acetonitrile was used as a solvent for this sample solution.

An HPLC/ELSD analysis of the above-mentioned solution was performed with a method generally conforming to JIS 7260-117:2006 (measurement of partition coefficient (1-octanol/water)-high performance liquid chromatography) under the following HPLC/ELSD analysis conditions, thereby measuring elution time (r.t.).

(HPLC/ELSD analysis conditions)

LC system: LC-20A (manufactured by Shimadzu Corp.)
Column: Inertsil ODS-3 3.0 × 150 mm, 5 μm (manufactured by GL Sciences Inc.)

| | | |
|---|---|---|
| Mobile phase: | A | water |
| | B | acetonitrile/tetrahydrofuran = 8/2 |

(vol/vol)
Acetonitrile: for high-performance liquid chromatography, manufactured by Kokusan Chemical Co., Ltd.
Tetrahydrofuran: inhibitor-free, for HPLC, manufactured by SIGMA-ALDRICH

| | | |
|---|---|---|
| Time program: | 0 min to 15 min | B from 30% to 100%, |
| | 15 min to 25 min | B 1000 |

Column temperature: 45°C
Flow rate: 0.8 mL/min
Injection volume: 10 μL (adjusted to 50 μL or 100 μL if sample detection sensitivity is low)
Detection: ELSD-LTII (Shimadzu Corp.) Gain6, 350 kPa, 65°C

(Derivation of calibration curve)

Standard compounds with known logP values described in JIS 7260-117:2006 (triphenylamine, phenanthrene, benzyl benzoate, and acetanilide) were prepared. Each standard compound was purchased as a commercially available reagent and used as it was without purification. 0.1 g of each standard compound was dissolved in 10 mL of tetrahydrofuran (inhibitor-free, for HPLC, manufactured by SIGMA-ALDRICH) to prepare a sample solution. The obtained sample solution was subjected to the HPLC/ELSD analysis under the analysis conditions described in aforementioned (HPLC/ELSD analysis conditions) to measure the elution time (r.t.). Note that the temperature of the ELSD detector was set to 25°C.

· Triphenylamine (manufactured by Kanto Kagaku Co., Cica-Reagent (guaranteed reagent), CAS=603-34-9, logP = 5.7, boiling point = 348°C): r.t. = 16.0 min, injection = 10 μL

· Phenanthrene (manufactured by Kanto Kagaku Co., Cica-Reagent (extra pure), CAS=85-01-8, logP = 4.5, boiling point = 375°C): r.t. = 13.6 min, injection = 50 μL
· Benzyl benzoate (manufactured by Kanto Kagaku Co., Cica-Reagent (guaranteed reagent), CAS=120-51-4, logP = 4.0, boiling point = 323°C): r.t. = 12.4 min, injection = 10 μL
· Acetanilide (manufactured by Kanto Kagaku Co., Cica-Reagent (extra pure), CAS=103-84-4, logP = 1.0, boiling point = 184°C): r.t. = 3.0 min, injection = 10 μL

The analysis results of the above-mentioned standard compounds were plotted on a coordinate system with the elution time (r.t.) on the horizontal axis and logP on the vertical axis, and an approximate straight line was created using the least squares method. This approximate straight line was adopted as a calibration curve. The above-mentioned calibration curve is shown in FIG. 1.

(Calculation of logP value of sample compound)

The elution time (r.t.) determined for each sample compound was applied to the above-mentioned calibration curve to determine the logP value of the sample compound. If multiple peaks indicating the elution time (r.t.) were detected per one sample compound in the HPLC/ELSD analysis, the peak top of the peak with the largest area is adopted as the elution time (r.t.) of the sample compound to obtain the logP value.

[Measurement method of reflectance]

The reflectance of the incident non-polarized light (wavelength of 300 nm to 950 nm) was measured using an integrating sphere with an ultraviolet visible light spectrophotometer ("UV-Vis 770" manufactured by JASCO Corp.).

[Production example 1: production of solution (G) including cholesteric liquid crystal composition capable of reflecting green clockwise circularly polarized light]

100 parts of a photopolymerizable liquid crystal compound (HSP = 24.4, logP = 6.01) represented by the following formula (X1); 25 parts of a photopolymerizable non-liquid crystal compound (HSP = 20.9, logP = 1.75) represented by the following formula (X2); 8.1 parts of a polymerizable chiral agent ("LC756" manufactured by BASF SE; HSP = 22.8, logP = 3.58); 4.1 parts of a photopolymerization initiator ("N-1919T" manufactured by ADEKA Corp.); 0.17 parts of a surfactant ("S-420" manufactured by AGC Seimi Chemical Co., Ltd.); and 120 parts of cyclopentanone and 200 parts of dioxolane as solvents were mixed to produce a solution (G) including a cholesteric liquid crystal composition capable of reflecting green clockwise circularly polarized light. The weighted average HSP and weighted average logP of the polymerizable compounds in the cholesteric liquid crystal composition included in this solution (G) were as follows.

$$\text{Weighted average HSP} = (24.4 \times 100 + 20.9 \times 25 + 22.8 \times 8.1) / (100 + 25 + 8.1) \approx 23.65$$

$$\text{Weighted average logP} = (6.01 \times 100 + 1.75 \times 25 + 3.58 \times 8.1) / (100 + 25 + 8.1) \approx 5.06$$

[Chemical formula 5]

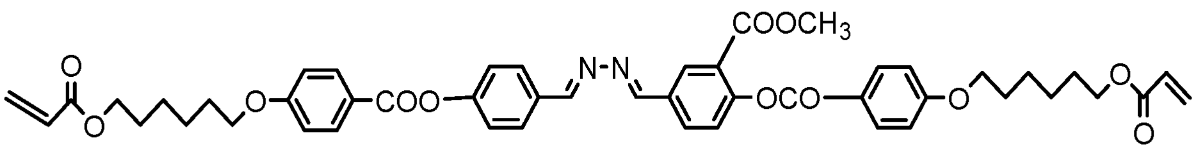

(X1)

[Chemical formula 6]

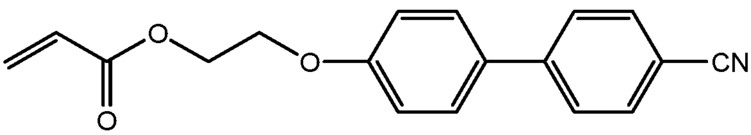

(X2)

[Production example 2: production of solution (R) including cholesteric liquid crystal composition capable of reflecting red clockwise circularly polarized light]

A solution (R) including a cholesteric liquid crystal composition capable of reflecting red clockwise circularly

polarized light was produced by the same manner as that of Production example 1 except that the amount of the chiral agent ("LC756" manufactured by BASF SE; HSP = 22.8, logP = 3.58) was changed to 6.8 parts. The weighted average HSP and the weighted average logP of the polymerizable compounds in the cholesteric liquid crystal composition included in the solution (R) were as follows.

$$\text{Weighted average HSP} = (24.4 \times 100 + 20.9 \times 25 + 22.8 \times 6.8) / (100 + 25 + 6.8) \approx 23.65$$

$$\text{Weighted average logP} = (6.01 \times 100 + 1.75 \times 25 + 3.58 \times 6.8) / (100 + 25 + 6.8) \approx 5.08$$

[Production example 3: production of solution (B) including cholesteric liquid crystal composition capable of reflecting blue clockwise circularly polarized light]

A solution (B) including a cholesteric liquid crystal composition capable of reflecting blue clockwise circularly polarized light was produced by the same manner as that of Production example 1 except that the amount of the chiral agent ("LC756" manufactured by BASF SE; HSP = 22.8, logP = 3.58) was changed to 9.9 parts. The weighted average HSP and the weighted average logP of the polymerizable compounds in the cholesteric liquid crystal composition included in the solution (B) were as follows.

$$\text{Weighted average HSP} = (24.4 \times 100 + 20.9 \times 25 + 22.8 \times 9.9) / (100 + 25 + 9.9) \approx 23.63$$

$$\text{Weighted average logP} = (6.01 \times 100 + 1.75 \times 25 + 3.58 \times 9.9) / (100 + 25 + 9.9) \approx 5.04$$

[Production example 4: production of cholesteric pigment (G) capable of reflecting green clockwise circularly polarized light]

A long-length polyethylene terephthalate film ("A4100" manufactured by Toyobo Co., Ltd.; thickness of 100 μm) was prepared as a substrate film. This substrate film was attached to a feeding unit of a film conveying device, and the following operations were performed while the substrate film was conveyed in the long-length direction.

The surface of the substrate film was subjected to a rubbing treatment in the long-length direction parallel to the conveying direction. Next, the solution (G) including the cholesteric liquid crystal composition produced in Production example 1 was applied onto the surface of the substrate film, having been subjected to the rubbing treatment, using a die coater to form a layer of the cholesteric liquid crystal composition. This layer of the cholesteric liquid crystal composition was subjected to an orientation treatment by heating at 120°C for 5 minutes. Subsequently, the layer of the cholesteric liquid crystal composition was irradiated with ultraviolet rays of 900 mJ/$cm^2$ to be cured. As a result, a multi-layer film including the substrate film and the layer of the liquid crystal cured product of the cholesteric liquid crystal composition was obtained. The reflectance of the layer of the liquid crystal cured product in this multilayer film was measured by the above-mentioned measurement method. As a result of measurement, the layer of the liquid crystal cured product had the selective reflection wavelength range where the reflectance relative to the non-polarized light is 40% or more having a central wavelength of 550 nm with a reflection band range of the central wavelength ±35 nm (i.e., 515 nm to 585 nm).

The layer of the liquid crystal cured product was peeled off from the above-mentioned multilayer film. The layer of the liquid crystal cured product was pulverized and classified to obtain a flake-shaped cholesteric pigment (G). The aspect ratio and thickness of the obtained cholesteric pigment (G) were measured. As a result, the aspect ratio was 8.3 and the thickness was 3.2 μm.

[Production example 5: production of cholesteric pigment (R) capable of reflecting red clockwise circularly polarized light]

A flake-shaped cholesteric pigment (R) was produced by the same manner as that of Production example 4 except that the solution (R) containing the cholesteric liquid crystal composition produced in Production example 2 was used instead of the solution (G). The cholesteric pigment (R) had the selective reflection wavelength range where the reflectance relative to the non-polarized light is 40% or more having a central wavelength of 650 nm with a reflection band range of the central wavelength ±35 nm (i.e., 615 nm to 685 nm). The cholesteric pigment (R) had an aspect ratio of 9.1 and a thickness of 3.5 μm.

[Production example 6: production of cholesteric pigment (B) capable of reflecting blue clockwise circularly polarized light]

A flake-shaped cholesteric pigment (B) was produced by the same manner as that of Production example 4 except that the solution (B) containing the cholesteric liquid crystal composition produced in Production example 3 was used instead of the solution (G). The cholesteric pigment (B) had the selective reflection wavelength range where the reflectance relative to the non-polarized light is 40% or more having a central wavelength of 450 nm with a reflection band range of the central wavelength ±35 nm (i.e., 415 nm to 485 nm). The cholesteric pigment (B) had an aspect ratio of 10.0 and a thickness of 3.0 μm.

[Example 1: production of ink composition (CLCink_G1) capable of reflecting green clockwise circularly polarized light]

100 parts by weight of a colorless transparent screen ink ("SG240_800 Medium" manufactured by Seiko Advance Co., Ltd.), 10 parts by weight of the cholesteric pigment (G) produced in Production example 4, 1 part by weight of a liquid crystal compound (Molecular weight = 846.3, HSP = 24.4, logP = 6.01) represented by the formula (X1) as a stabilizer, and 5 parts by weight of dioxolan (HSP = 21.4) as a diluent were mixed to obtain an ink composition (CLCink_G1).
The composition of the above-mentioned screen ink was as follows.

(Major components_1% or more of disclosed components)

- Acrylic resin: 27 parts by weight
- Olefinic based resin: 3 parts by weight
- Diacetone alcohol (CAS No. 123-42-2): 37 parts by weight
- Glycol glycol derivative solvent: 31 parts by weight

[Example 2: production of ink composition (CLCink_G2) capable of reflecting green clockwise circularly polarized light]

An ink composition (CLCink_G2) was produced by the same manner as that of Example 1 except that the amount of the liquid crystal compound (HSP = 24.4, logP = 6.01) represented by the formula (X1) as a stabilizer was changed to 1.5 parts by weight.

[Example 3: production of ink composition (CLCink_G3) capable of reflecting green clockwise circularly polarized light]

An ink composition (CLCink_G3) was produced by the same manner as that of Example 1 except that the amount of the liquid crystal compound (HSP = 24.4, logP = 6.01) represented by the formula (X1) as a stabilizer was changed to 2 parts by weight.

[Example 4: production of ink composition (CLCink_G4) capable of reflecting green clockwise circularly polarized light]

An ink composition (CLCink_G4) was produced by the same manner as that of Example 1 except that 0.5 part by weight of a non-liquid crystal compound (molecular weight = 293.1, HSP = 20.9, logP = 1.75) represented by the formula (X2) was used instead of 1 part of the liquid crystal compound represented by the formula (X1) as a stabilizer.

[Example 5: production of ink composition (CLCink_G5) capable of reflecting green clockwise circularly polarized light]

An ink composition (CLCink_G5) was produced by the same manner as that of Example 1 except that 1.5 parts by weight of a compound ("LC756" manufactured by BASF SE, molecular weight = 966.3, HSP = 22.8, logP = 3.58)

represented by the following formula (X3) was used instead of 1 part by weight of the liquid crystal compound represented by the formula (X1) as a stabilizer.

[Chemical formula 7]

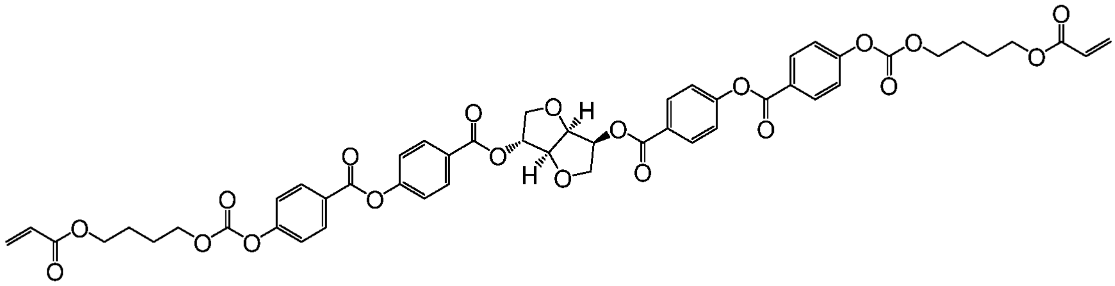

(X3)

[Example 6: production of ink composition (CLCink_G6) capable of reflecting green clockwise circularly polarized light]

An ink composition (CLCink_G6) was produced by the same manner as that of Example 1 except that 1.5 parts by weight of a compound (molecular weight = 816.3, HSP = 19.2, logP = 5.11) represented by the following formula (X4) was used instead of 1 part by weight of the liquid crystal compound represented by the formula (X1) as a stabilizer.

[Chemical formula 8]

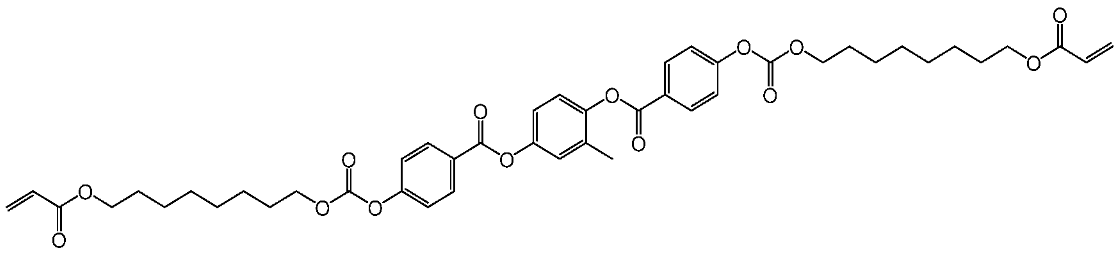

(X4)

[Example 7: production of ink composition (CLCink_G7) capable of reflecting green clockwise circularly polarized light]

An ink composition (CLCink_G7) was produced by the same manner as that of Example 1 except that the type of the diluent was changed to ethanol (HSP = 26.5) .

[Example 8: production of ink composition (CLCink_G8) capable of reflecting green clockwise circularly polarized light]

An ink composition (CLCink_G8) was produced by the same manner as that of Example 1 except that the type of the diluent was changed to cyclohexane (HSP = 16.8).

[Example 9: production of ink composition (CLCink_R1) capable of reflecting red clockwise circularly polarized light]

An ink composition (CLCink_R1) was produced by the same manner as that of Example 1 except that 10 parts by weight of the cholesteric pigment (R) produced in Production example 5 was used instead of 10 parts by weight of the cholesteric pigment (G), and the amount of the stabilizer was changed to 1.5 parts by weight.

[Example 10: production of ink composition (CLCink_B1) capable of reflecting blue clockwise circularly polarized light]

An ink composition (CLCink_B1) was produced by the same manner as that of Example 1 except that 10 parts by weight of the cholesteric pigment (B) produced in Production example 6 was used instead of 10 parts by weight of the cholesteric pigment (G), and the amount of the stabilizer was changed to 1.5 parts by weight.

[Comparative Example 1: production of ink composition (CLCink_G0) capable of reflecting green clockwise circularly polarized light]

An ink composition (CLCink_B0) was produced by the same manner as that of Example 1 except that no stabilizer was used.

[Comparative Example 2: production of ink composition (CLCink_R0) capable of reflecting red clockwise circularly polarized light]

An ink composition (CLCink_R0) was produced by the same manner as that of Example 1 except that 10 parts by weight of the cholesteric pigment (R) produced in Production example 5 was used instead of 10 parts by weight of the cholesteric pigment (G), and no stabilizer was used.

[Comparative Example 3: production of ink composition (CLCink_B0) capable of reflecting blue clockwise circularly polarized light]

An ink composition (CLCink_B0) was produced by the same manner as that of Example 1 except that 10 parts by weight of the cholesteric pigment (B) produced in Production example 6 was used instead of 10 parts by weight of the cholesteric pigment (G), and no stabilizer was used.

[Summary of composition of ink composition]

The blending compositions of the ink compositions produced in the above-mentioned Examples and Comparative examples were summarized in Table 1 below. Table 2 summarized $|\Delta HSP_1|$, $|\Delta logP_1|$, square root of sum of squares $(|\Delta HSP_1|^2+|\Delta logP_1|^2)^{1/2}$, and $|\Delta HSP_2|$ in each of Examples and Comparative examples. Abbreviations in Table 1 have the following meanings.

DI: dioxolane
ET: ethanol
CY: cyclohexane

[Table 1]

**[Table 1. Composition of Ink Compositions]**

| | ink composition | pigment | | | stabilizer | | | | diluent | |
|---|---|---|---|---|---|---|---|---|---|---|
| | | type | weighted average HSP | weighted average logP | type | HSP | logP | amount | type | HSP |
| Example 1 | G1 | G | 23.65 | 5.06 | X1 | 24.4 | 6.01 | 1 | DI | 21.4 |
| Example 2 | G2 | G | 23.65 | 5.06 | X1 | 24.4 | 6.01 | 1.5 | DI | 21.4 |
| Example 3 | G3 | G | 23.65 | 5.06 | X1 | 24.4 | 6.01 | 2 | DI | 21.4 |
| Example 4 | G4 | G | 23.65 | 5.06 | X2 | 20.9 | 1.75 | 0.5 | DI | 21.4 |
| Example 5 | G5 | G | 23.65 | 5.06 | X3 | 22.8 | 3.58 | 1.5 | DI | 21.4 |
| Example 6 | G6 | G | 23.65 | 5.06 | X4 | 19.2 | 5.11 | 1.5 | DI | 21.4 |
| Example 7 | G7 | G | 23.65 | 5.06 | X1 | 24.4 | 6.01 | 1 | ET | 26.5 |
| Example 8 | G8 | G | 23.65 | 5.06 | X1 | 24.4 | 6.01 | 1 | CY | 16.8 |
| Comparative Example 1 | G0 | G | 23.65 | 5.06 | - | - | - | - | DI | 21.4 |
| Example 9 | R1 | R | 23.65 | 5.08 | X1 | 24.4 | 6.01 | 1.5 | DI | 21.4 |
| Comparative Example 2 | R0 | R | 23.65 | 5.08 | - | - | - | - | DI | 21.4 |
| Example 10 | B1 | B | 23.63 | 5.04 | X1 | 24.4 | 6.01 | 1.5 | DI | 21.4 |
| Comparative Example 3 | B0 | B | 23.63 | 5.04 | - | - | - | - | DI | 21.4 |

[Table 2]

**[Table 2. Parameters of Ink Compositions]**

| | ink composition | $\lvert\Delta HSP_1\rvert$ | $\lvert\Delta logP_1\rvert$ | square root of sum of squares | $\lvert\Delta HSP_2\rvert$ |
|---|---|---|---|---|---|
| Example 1 | G1 | 0.75 | 0.95 | 1.21 | 2.25 |
| Example 2 | G2 | 0.75 | 0.95 | 1.21 | 2.25 |
| Example 3 | G3 | 0.75 | 0.95 | 1.21 | 2.25 |
| Example 4 | G4 | 2.75 | 3.31 | 4.30 | 2.25 |
| Example 5 | G5 | 0.85 | 1.48 | 1.71 | 2.25 |
| Example 6 | G6 | 4.45 | 0.05 | 4.45 | 2.25 |
| Example 7 | G7 | 0.75 | 0.95 | 1.21 | 2.85 |
| Example 8 | G8 | 0.75 | 0.95 | 1.21 | 6.85 |
| Comparative Example 1 | G0 | - | - | - | - |
| Example 9 | R1 | 0.75 | 0.93 | 1.19 | 2.25 |
| Comparative Example 2 | R0 | - | - | - | - |
| Example 10 | B1 | 0.77 | 0.97 | 1.24 | 2.23 |
| Comparative Example 3 | B0 | - | - | - | - |

[Durability test]

The durability test described below was performed for each of the ink compositions produced in the above-mentioned Examples and Comparative examples.

As a substrate for printing, a black polyethylene terephthalate substrate (thickness of 100 μm) was prepared. One surface of this substrate was subjected to a corona discharge treatment to improve printability.

The ink composition was printed on the corona discharge treated surface of the substrate using a 100-mesh screen printing plate to form a 5 cm × 30 cm rectangular display layer. After that, the display layer was dried at 60°C for 30 minutes. Reflectance spectrum of the display layer thus obtained was measured to confirm that the display layer had a uniform reflectance spectrum over the entire rectangle of the display layer. From the reflectance spectrum of the display layer before the durability test, the central wavelength of the selective reflection wavelength range of the cholesteric pigment included in the display layer was obtained and adopted as a reference value.

After that, both the display layers and the substrates were cut into a 5 cm square to obtain samples. These samples were stored in a high temperature and high humidity chamber (temperature of 90°C, humidity of 80% RH). After 1 day, 3 days, 7 days, and 14 days from the start of storage, part of samples was taken out, and the reflectance spectrum of the display layer was measured to determine the central wavelength of the selective reflection wavelength range of the cholesteric pigment included in the display layer.

The results of each of Examples and Comparative examples are shown in Table 3 below. Abbreviations in Table 3 have the following meanings.

Pigment initial value: the central wavelength of the selective reflection wavelength range of the cholesteric pigment before preparation of the ink composition

Immediately after printing (reference value): the central wavelength of the selective reflection wavelength range of the cholesteric pigment before the durability test.

On day 1: the central wavelength of the selective reflection wavelength range of the cholesteric pigment after 1 day from the start of storage

On day 3: the central wavelength of the selective reflection wavelength range of the cholesteric pigment after 3 days from the start of storage

On day 7: the central wavelength of the selective reflection wavelength range of the cholesteric pigment after 7 days

from the start of storage

On day 14: the central wavelength of the selective reflection wavelength range of the cholesteric pigment after 14 days from the start of storage

[Table 3]

**[Table 3. Results of Durability Test]**

| | central wavelength (nm) | | | | | | | |
|---|---|---|---|---|---|---|---|---|
| | pigment initial value | Immediately after printing (reference value) | On day 1 | On day 3 | On day 7 | On day 14 | initial value - reference value | On day 14 - reference value |
| Example 1 | 550 | 539 | 539 | 539 | 538 | 538 | 11 | -1 |
| Example 2 | 550 | 540 | 542 | 541 | 540 | 540 | 10 | 0 |
| Example 3 | 550 | 541 | 548 | 547 | 545 | 545 | 9 | 4 |
| Example 4 | 550 | 539 | 515 | 514 | 514 | 514 | 11 | -25 |
| Example 5 | 550 | 539 | 513 | 512 | 512 | 511 | 11 | -28 |
| Example 6 | 550 | 540 | 515 | 515 | 514 | 514 | 10 | -26 |
| Example 7 | 550 | 544 | 543 | 542 | 542 | 542 | 6 | -2 |
| Example 8 | 550 | 543 | 543 | 543 | 542 | 542 | 7 | -1 |
| Comparative Example 1 | 550 | 539 | 511 | 509 | 508 | 507 | 11 | -32 |
| Example 9 | 650 | 641 | 639 | 638 | 638 | 637 | 9 | -4 |
| Comparative Example 2 | 650 | 640 | 595 | 590 | 587 | 586 | 10 | -54 |
| Example 10 | 450 | 445 | 445 | 444 | 444 | 444 | 5 | -1 |
| Comparative Example 3 | 450 | 443 | 425 | 420 | 418 | 417 | 7 | -26 |

[Discussion]

Examples 1 to 8 and Comparative example 1 represent experiments using the same cholesteric pigment. In Comparative example 1 in which the stabilizer was not used, there is a large difference between the central wavelength of the selective reflection wavelength range of the cholesteric pigment included in the display layer immediately after printing and the central wavelength of the selective reflection wavelength range of the cholesteric pigment included in the display layer after storage in a high-temperature and high-humidity environment. On the other hand, in Examples 1 to 8 in which the stabilizer was used, there is a small difference between the central wavelength of the selective reflection wavelength range of the cholesteric pigment included in the display layer immediately after printing and the central wavelength of the selective reflection wavelength range of the cholesteric pigment included in the display layer after storage in a high-temperature and high-humidity environment. This confirmed that the use of the stabilizer could improve durability of the cholesteric pigment included in the ink composition and suppress a change in the selective reflection wavelength range in a high-temperature and high-humidity environment.

Among Examples 1 to 8, in Examples 1 to 3, 7, and 8 in which the same compound as the liquid crystal compound (polymerizable compound represented by the formula (X1)), which was the main component monomer of the cholesteric pigment, was used as the stabilizer, a change in the selective reflection wavelength range caused by the storage in a high-temperature and high-humidity environment is particularly small. This confirmed that, in order to effectively improve the durability of the cholesteric pigment, it was preferable to adopt, as the stabilizer, the same compound as the polymerizable compound included in the liquid crystal composition as a raw material for the liquid crystal cured

product included in the cholesteric pigment, it was preferable to adopt, as the stabilizer, the same compound as the main component monomer of the liquid crystal composition, and it was preferable to adopt, as the stabilizer, the liquid crystal compound.

Among Examples 1 to 3 in which elements other than the amount of the stabilizer are common, Example 2 has a particularly small change in the selective reflection wavelength range caused by the storage in a high-temperature and high-humidity environment. This confirmed that there was an appropriate amount of the stabilizer for effectively improving the durability of the cholesteric pigment.

Among Examples 1, 7, and 8 in which elements other than the type of a diluent are common, in Example 7 in which the diluent (specifically, ethanol) with HSP of 26 or more was used, and, in Example 8 in which the diluent (specifically, cyclohexane) with HSP of 18 or less was used, the central wavelength of the selective reflection wavelength range of the cholesteric pigment included in the display layer immediately after printing is closer to the central wavelength of the selective reflection wavelength range of the cholesteric pigment before preparation of the ink composition. Thus, it was found that, from the viewpoint of reducing a change in the selective reflection wavelength range of the cholesteric pigment caused by the preparation of the ink composition, it was preferable to use the diluent with HSP having a large difference from the weighted average HSP of the polymerizable compounds included in the liquid crystal composition as a raw material for the liquid crystal cured product included in the cholesteric pigment.

In Examples 9 and 10 and Comparative examples 2 and 3 in which the cholesteric pigments different from that in Examples 1 to 8 and Comparative example 1 were used, a change in the selective reflection wavelength range in a high-temperature and high-humidity environment can be suppressed by the stabilizer. Thus, it can be expected that the above-mentioned effects of the stabilizer can be exhibited in a wide range of the cholesteric pigments.

## Claims

1. An ink composition comprising: a cholesteric pigment that includes a cured product of a liquid crystal composition including a polymerizable compound; and a non-volatile organic compound, wherein

    an absolute value $|\Delta HSP_1|$ of a difference between a weighted average of HSP of the polymerizable compound and HSP of the organic compound is 3.0 or less; or
    an absolute value $|\Delta logP_1|$ of a difference between a weighted average of logP of the polymerizable compound and logP of the organic compound is 1.0 or less.

2. The ink composition according to claim 1, wherein the liquid crystal composition includes the same compound as the organic compound.

3. The ink composition according to claim 1 or 2, wherein the organic compound is a liquid crystal compound.

4. The ink composition according to any one of claims 1 to 3, wherein a square root of a sum of squares $\{|\Delta HSP_1|^2 + |\Delta logP_1|^2\}^{1/2}$ of the absolute value $|\Delta HSP_1|$ and the absolute value $|\Delta logP_1|$ is 5.0 or less.

5. The ink composition according to any one of claims 1 to 4, wherein a square root of a sum of squares $\{|\Delta HSP_1|^2 + |\Delta logP_1|^2\}^{1/2}$ of the absolute value $|\Delta HSP_1|$ and the absolute value $|\Delta logP_1|$ is 1.5 or less.

6. The ink composition according to any one of claims 1 to 5, wherein:

    the polymerizable compound includes a main component monomer;
    an amount of the main component monomer included in the liquid crystal composition is 50% by weight or more relative to 100% by weight of a non-volatile component in the liquid crystal composition; and
    the main component monomer and the organic compound are the same as each other.

7. The ink composition according to any one of claims 1 to 6, including an organic solvent containing a diluent, wherein an absolute value $|\Delta HSP_2|$ of a difference between a weighted average of HSP of the polymerizable compound and HSP of the diluent is greater than 2.

8. The ink composition according to claim 7, wherein the diluent has HSP of 26 or more.

9. The ink composition according to claim 7, wherein the diluent has HSP of 18 or less.

10. The ink composition according to any one of claims 1 to 9, wherein the polymerizable compound includes a compound represented by the following formula (X1):

<Chemical formula 1>

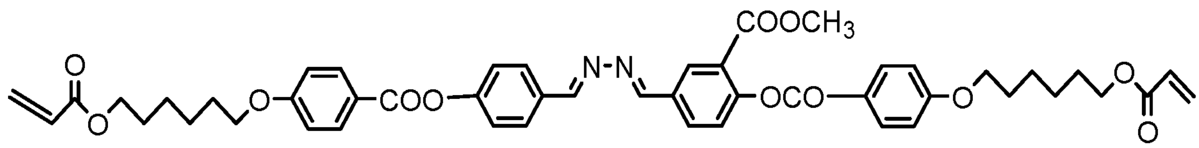

(X1)

.

11. The ink composition according to any one of claims 1 to 10, wherein:

the cholesteric pigment has a selective reflection wavelength range in which the cholesteric pigment can reflect circularly polarized light having one rotation direction, and can transmit circularly polarized light having a rotation direction opposite to the one rotation direction; and
a wavelength width of the selective reflection wavelength range is 50 nm or more.

12. The ink composition according to claim 11, wherein the selective reflection wavelength range includes an entire visible wavelength range.

13. The ink composition according to any one of claims 1 to 12, wherein the cholesteric pigment has a flake-shape.

14. The ink composition according to claim 13, wherein a thickness of the cholesteric pigment is 20 μm or less.

15. The ink composition according to any one of claims 1 to 14, wherein an amount of the organic compound is 0.5 part by weight or more and 10 parts by weight or less relative to 100 parts by weight of the cholesteric pigment.

16. The ink composition according to any one of claims 1 to 15, wherein when a display layer formed by applying the ink composition is subjected to a durability test in which the display layer is stored for 14 days in an environment with a temperature of 90°C and a humidity of 80% RH, an amount of change of a central wavelength of a selective reflection wavelength range of the cholesteric pigment is 15 nm or less.

17. An article comprising a display layer obtained by applying the ink composition according to any one of claims 1 to 16.

18. A method for producing an article comprising applying the ink composition according to any one of claims 1 to 16 to form a display layer.

FIG.1

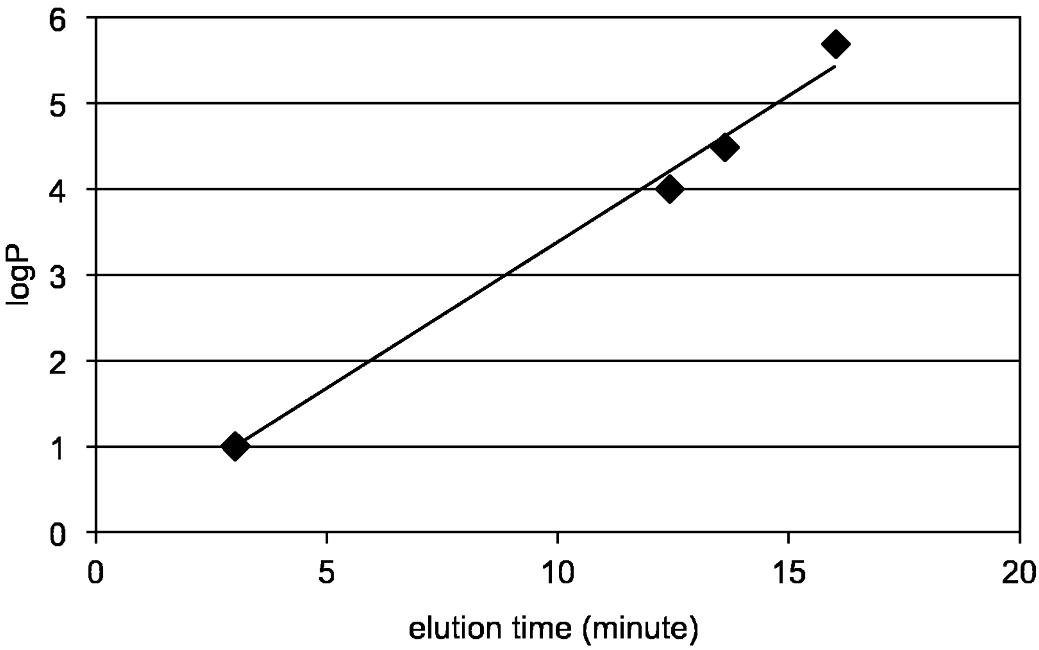

## INTERNATIONAL SEARCH REPORT

International application No.
**PCT/JP2022/005587**

### A. CLASSIFICATION OF SUBJECT MATTER

***B41M 1/30***(2006.01)i; ***C09D 11/037***(2014.01)i; ***B32B 7/12***(2006.01)i; ***G02B 5/30***(2006.01)i
FI: C09D11/037; B41M1/30 D; G02B5/30; B32B7/12

According to International Patent Classification (IPC) or to both national classification and IPC

### B. FIELDS SEARCHED

Minimum documentation searched (classification system followed by classification symbols)

B41M1/30; C09D11/037; G02B5/30; B32B7/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2005-099158 A (DAINIPPON PRINTING CO LTD) 14 April 2005 (2005-04-14) claims, paragraphs [0028], [0030]-[0041], [0050]-[0069], [0076], [0101]-[0113] | 1-6, 13-18 |
| Y | claims, paragraphs [0028], [0030]-[0041], [0050]-[0069], [0076], [0101]-[0113] | 10-12 |
| A | claims, paragraphs [0028], [0030]-[0041], [0050]-[0069], [0076], [0101]-[0113] | 7-9 |
| Y | WO 2019/189144 A1 (ZEON CORP) 03 October 2019 (2019-10-03) claims, paragraphs [0087]-[0098], etc. | 10-12 |
| A | JP 2003-195045 A (TOPPAN PRINTING CO LTD) 09 July 2003 (2003-07-09) claims, examples, etc. | 1-18 |
| A | JP 2005-350626 A (NITTO DENKO CORP) 22 December 2005 (2005-12-22) claims, examples, etc. | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **28 March 2022** | **12 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (January 2015)

**INTERNATIONAL SEARCH REPORT**
**Information on patent family members**

International application No.
**PCT/JP2022/005587**

| Patent document cited in search report | Publication date (day/month/year) | Patent family member(s) | Publication date (day/month/year) |
|---|---|---|---|
| JP 2005-099158 A | 14 April 2005 | (Family: none) | |
| WO 2019/189144 A1 | 03 October 2019 | TW 202003603 A | |
| JP 2003-195045 A | 09 July 2003 | (Family: none) | |
| JP 2005-350626 A | 22 December 2005 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002114935 A
- JP 2002121408 A
- JP 2003253187 A
- JP 2004358869 A
- JP 2005289881 A
- JP 2004115414 A
- JP 2003066214 A
- JP 2003313187 A
- JP 2003342219 A
- JP 2000290315 A
- JP HEI6072962 A
- US 6468444 B
- WO 9800428 A
- JP 2007176870 A
- WO 2016002765 A
- JP 2009300662 A
- JP 2014174471 A
- JP 2015027743 A
- JP 6142714 B


### Non-patent literature cited in the description


- *CHEMICAL ABSTRACTS,* 123-42-2